# EUROPEAN PATENT APPLICATION

(11) **EP 1 713 077 A2**
(43) Date of publication of application: **18.10.2006**
(21) Application number: 06112287.5
(22) Date of filing: 06.04.2006
(51) Int. Cl.: G11B 27/10, G11B 27/11, G11B 20/00

(54) **Information storage medium, information recording apparatus, and information playback apparatus**

(30) Priority: 12.04.2005 JP 2005115130
(71) Applicant: KABUSHIKI KAISHA TOSHIBA, Tokyo 105-8001 (JP)
(72) Inventor: Yamagata, Yoichiro Toshiba Corporation, Minato-ku Tokyo 105-8001 (JP); Takahashi, Toshinari Toshiba Corporation, Minato-ku Tokyo 105-8001 (JP); Kamibayashi, Tooru Toshiba Corporation, Minato-ku Tokyo 105-8001 (JP); Kaneko, Toshimitsu Toshiba Corporation, Minato-ku Tokyo 105-8001 (JP); Toyama, Haruhiko Toshiba Corporation, Minato-ku Tokyo 105-8001 (JP); Mimura, Hideki Toshiba Corporation, Minato-ku Tokyo 105-8001 (JP); Tsumagari, Yasufumi Toshiba Corporation, Minato-ku Tokyo 105-8001 (JP); Ishibashi, Yasuhiro Toshiba Corporation, Minato-ku Tokyo 105-8001 (JP); Kobayashi, Takero Toshiba Corporation, Minato-ku Tokyo 105-8001 (JP); Nakamura, Seiichi Toshiba Corporation, Minato-ku Tokyo 105-8001 (JP); Shuto, Eita Toshiba Corporation, Minato-ku Tokyo 105-8001 (JP); Taira, Kazuhiko Toshiba Corporation, Minato-ku Tokyo 105-8001 (JP); Sato, Hideaki Toshiba Corporation, Minato-ku Tokyo 105-8001 (JP); Kawabata, Shunichi Toshiba Corporation, Minato-ku Tokyo 105-8001 (JP)
(74) Representative: Henkel, Feiler & Hänzel

(57) **Abstract**

Systems and methods for selecting information associated with a removable storage medium (1) are disclosed. A multimedia presentation, such as a movie, is stored on the removable storage medium (1). A provider key is used to identify a particular content provider, such as a film studio, with the removable storage medium (1). Other media content associated with the same content provider is activated at least partially in response to a determination that the removable storage medium (1) of the content provider has been inserted into an information storage medium, such as a computer or a DVD player.

## Description

One embodiment of the invention relates to an information storage medium for storing information, an information recording apparatus for recording information on this information storage medium, and an information playback apparatus for playing back this information storage medium.

In recent years, DVD-Video discs having high image quality and advanced functions, and video players that play back such discs have prevailed, and the range of choice for peripheral devices and the like used to play back such multi-channel audio has broadened. An environment for personal implementation of a home theater that allows users to freely enjoy movies, animations, and the like with high image quality and high sound quality has become available.

The users can enjoy games furnished with a variety of functions by using such DVD-Video discs and manage information such as game scores. For example, Jpn. Pat. Appln. KOKAI Publication No. 2005-56446 discloses a DVD-Video disc capable of providing a sense of game by using a versatile DVD-Video player.

In playback of contents such as a game, various kinds of information such as a game score are generated. For example, while a disc is mounted in an apparatus such as a player, information such as a game score is not erased and can effectively be used. However, when a disc is removed from the apparatus in order to, e.g., replace the disc with a new one, or when the apparatus is powered off, information such as a score, which has been generated, is erased unless a countermeasure for erasure is made. The above prior art does not disclose any technique for processing information such as a score generated in progress of a game.

Systems and methods for selecting information associated with a removable storage medium are disclosed. A multimedia presentation, such as a movie, is stored on the removable storage medium. A provider key is used to identify a particular content provider, such as a film studio, with the removable storage medium. Other media content associated with the same content provider is activated at least partially in response to a determination that the removable storage medium of the content provider has been inserted into an information storage medium, such as a computer or a DVD player.

This summary of the invention does not necessarily describe all necessary features so that the invention may also be a sub-combination of these described features.

The invention can be more fully understood from the following detailed description when taken in conjunction with the accompanying drawings, in which:
FIG. 1 is an exemplary view for explaining information contents recorded on a disk-shaped information storage medium (optical disc, etc.) according to an embodiment of the invention;
FIG. 2 is an exemplary view for explaining an example of a file system which manages the contents recorded on the disk-shaped information storage medium according to the embodiment of the invention;
FIG. 3 is an exemplary view for explaining an example of the recording contents of an advanced contents recording area of information contents recorded on a disk-shaped information storage medium (optical disc, etc.) according to another embodiment of the invention;
FIG. 4 is an exemplary view for explaining an example of the recording contents of an advanced HD video title set (AHDVTS) recording area of information contents recorded on a disk-shaped information storage medium (optical disc, etc.) according to still another embodiment of the invention;
FIG. 5 is an exemplary block diagram for explaining an example of the internal structure of a playback apparatus according to still another embodiment of the invention;
FIG. 6 is an exemplary block diagram for explaining an example of the internal structure of a playback apparatus according to still another embodiment of the invention;
FIG. 7 is an exemplary view exemplifying an outline of the playback system model of an advanced content;
FIG. 8 is an exemplary view for explaining an example of a data flow in the playback system model of the advanced content;
FIG. 9 is an exemplary view for explaining another example of the data flow in the playback system model of the advanced content;
FIG. 10 is an exemplary view for explaining still another example of the data flow in the playback system model of the advanced content;
FIG. 11 is an exemplary view for explaining still another example of the data flow in the playback system model of the advanced content;
FIG. 12 is an exemplary view for explaining the relationship between pieces of information associated with a playlist;
FIG. 13 is an exemplary view for explaining an arrangement of the playlist;
FIG. 14 is an exemplary view showing the relationship among a disc on which contents are recorded, a player, and a persistent storage;
FIG. 15 is an exemplary view showing structures of various kinds of information recorded in the persistent storage;
FIG. 16 is an exemplary view showing a directory structure of the various kinds of information stored in the persistent storage;
FIG. 17 is an exemplary view for representing the directory structure in a form different from that in FIG. 16;
FIG. 18 is an exemplary conceptual view of the various kinds of information recorded in the persistent storage when seen from the side of contents on the disc;
FIG. 19 is an exemplary view showing an example of a menu screen for individual resources managed on the persistent storage;
FIGS. 20A and 20B are exemplary views for explaining that the individual resources are uniquely specified in accordance with information in a generalized expression format;
FIG. 21 is an exemplary flowchart showing an operation when the player accesses the resources; and
FIG. 22 is an exemplary view for explaining a portion of mapping information.

Various embodiments according to the invention will be described hereinafter with reference to the accompanying drawings.

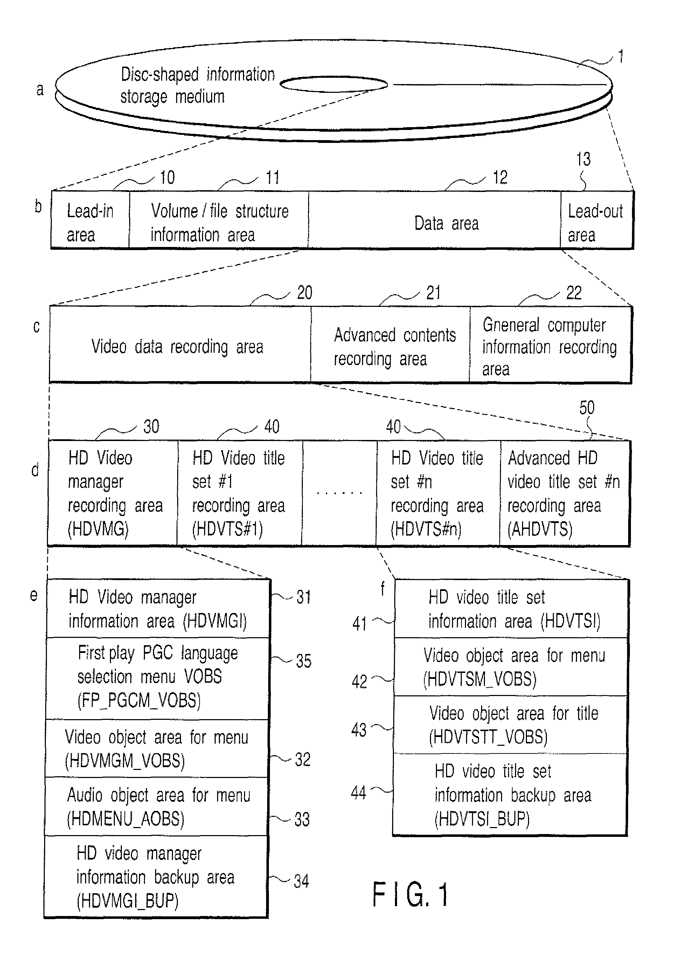

FIG. 1 is an exemplary view for explaining the information contents recorded on a disk-shaped information storage medium according to an embodiment of the invention. An information storage medium 1 shown in FIG. 1, reference a, can be configured by a high-density optical disk (a high-density or high-definition digital versatile disc (HD_DVD for short)) which uses, e.g., a red laser of a wavelength of 650 nm or a blue laser of a wavelength of 405 nm (or less).

The information storage medium 1 includes a lead-in area 10, data area 12, and lead-out area 13 from the inner periphery side, as shown in FIG. 1, reference b. The information storage medium 1 adopts the ISO9660 and UDF bridge structures as a file system, and has an ISO9660 and UDF volume/file structure information area 11 on the lead-in side of the data area 12.

The data area 12 allows mixed allocations of a video data recording area 20 used to record DVD-Video contents (also called standard contents or SD contents), another video data recording area (advanced contents recording area used to record advanced contents) 21, and a general computer information recording area 22, as shown in FIG. 1, reference c. (Note that the plural form "contents" includes the meaning of the singular form "content", and the singular form "content" is a representative singular form.)

The video data recording area 20 includes an HD video manager (HDVMG: High Definition-compatible Video Manager) recording area 30 that records management information associated with the HD_DVD-Video contents recorded in the video data recording area 20, an HD video title set (HDVTS: High Definition-compatible Video Title Set: also called standard VTS) recording area 40 which are arranged for respective titles, and record management information and video information (video objects) for respective titles together, and an advanced HD video title set (AHDVTS: advanced VTS) recording area 50, as shown in FIG. 1, reference d.

The HD video manager (HDVMG) recording area 30 includes an HD video manager information (HDVMGI: High Definition-compatible Video Manager Information) area 31 that indicates management information associated with the overall video data recording area 20, an HD video manager information backup (HDVMGI_BUP) area 34 that records the same information as in the HD video manager information area 31 as its backup, and a menu video object (HDVMGM_VOBS) area 32 that records a top menu screen indicating the whole video data recording area 20, as shown in FIG. 1, reference e.

In the embodiment of the invention, the HD video manager recording area 30 newly includes a menu audio object (HDMENU_AOBS) area 33 that records audio information to be output in parallel upon menu display. An area of a first play PGC language select menu VOBS (FP_PGCM_VOBS) 35 which is executed upon first access after the disc (information storage medium) 1 is loaded into a disc drive is configured to record a screen that can set a menu description language code and the like.

An HD video title set (HDVTS) recording area 40 that records management information and video information (video objects) together for each title includes an HD video title set information (HDVTSI) area 41 which records management information for the contents in the HD video title set recording area 40, an HD video title set information backup (HDVTSI_BUP) area 44 which records the same information as in the HD video title set information area 41 as its backup data, a menu video object (HDVTSM_VOBS) area 42 which records information of menu screens for each video title set, and a title video object (HDVTSTT_VOBS) area 43 which records video object data (title video information) in this video title set.

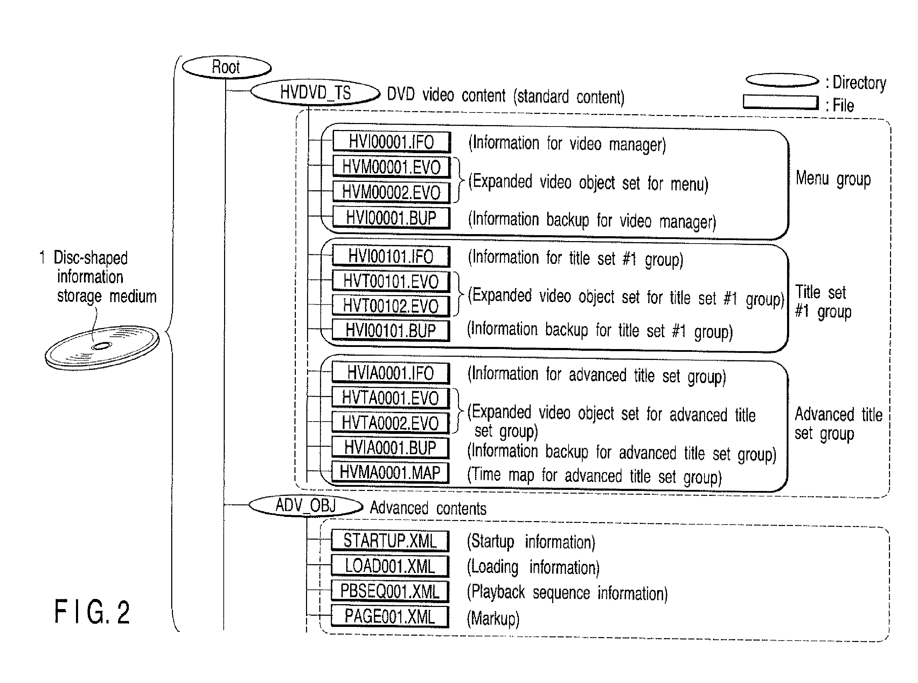

FIG. 2 is an exemplary view for explaining an example of a file system which manages contents recorded on the disk-shaped information storage medium according to the embodiment of the invention. The areas (30, 40) shown in FIG. 1 form independent files in the file system having the ISO9660 and UDF bridge structures. Conventional (standard SD) DVD-Video contents are allocated together under a directory named "VIDEO_TS". On the other hand, files according to the embodiment of the invention have a configuration in which an HVDVD_TS directory for storing information files that handle High-Definition video data, and an ADV_OBJ directory for storing information files that handle advanced object data are allocated under a Root directory, as shown in, e.g., FIG. 2.

The HVDVD_TS directory broadly includes a group of files which belong to a menu group used for a menu, and groups of files which belong to title set groups used for titles. As the group of files that belong to the menu group, an information file (HVI00001.IFO) for a video manager having information used to manage the disk, its backup file (HVI00001.BUP), and playback data files (HVM00001.EVO to HVM00003.EVO) of expanded video object sets for a menu used as background frames of a menu are stored.

As the group of files that belong to a title set #n group (e.g., title set #1 group), an information file (HVIxxx01.IFO: xxx = 001 to 999) for a video title set having information used to manage title set #n, its backup file (HVIxxx01.BUP: xxx = 001 to 999), playback data files (HVTxxxyy.EVO: xxx = 001 to 999, yy = 01 to 99) of expanded video object sets for title set #n used as a title are stored.

Furthermore, as the group of files that belong to an advanced title set group, an information file (HVIA0001.IFO) for a video title set having information used to manage an advanced title set, its backup file (HVIA0001.BUP), playback data files (HVTAxxyy.EVO: xx = 01 to 99, yy = 01 to 99) of video object sets for advanced title sets used as titles, time map information files (HVMAxxxx.MAP: xxxx = 0001 to 9999) for advanced title sets, their backup files (HVMAxxxx.BUP: xxxx = 0001 to 9999, not shown), and the like are stored.

The ADV_OBJ directory stores a startup information file (STARTUP.XML), loading information file (LOAD001.XML), playback sequence information file (PBSEQ001.XML), markup language file (PAGE001.XML), moving picture data, animation data, still picture data file, audio data file, font data file, and the like. Note that the contents of the startup information file include startup information of data such as moving picture data, animation data, still picture data, audio data, font data, a markup language used to control playback of these data, and the like. The loading information file records loading information (that can be described using a markup language/script language/style sheet, and the like), which describes information associated with files to be loaded onto a buffer in a playback apparatus, and the like.

The playback sequence information file (PBSEQ001.XML) records playback sequence information (that can be also described using a markup language or the like), which defines a section to be played back of the playback data files of expansion video object sets for advanced title sets in the advanced title set group, and the like.

Note that the markup language is a language that describes text attributes along commands which are defined in advance, and can give the font type, size, color, and the like to a character string as attributes. In other words, the markup language is a description language which describes structures (headings, hyperlinks, and the like) and modification information (character size, the state of composition, and the like) of sentences in these sentences by partially bounding special character strings called "tags".

Since a document written using the markup language becomes a text file, the user can normally read it using a text editor, and can edit that file, of course. As typical markup languages, standard generalized markup language (SGML), hypertext markup language (HTML) evolved from SGML, TeX, and the like are known.

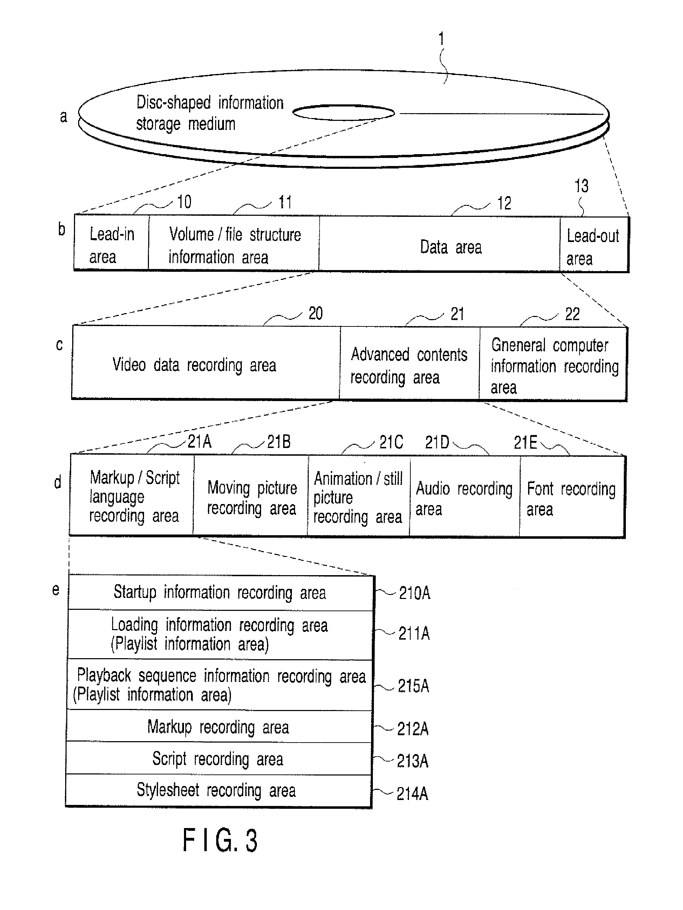

FIG. 3 is an exemplary view for explaining an example of the recording contents of an advanced contents recording area of the information contents recorded on a disk-shaped information storage medium (optical disc, etc.) 1 according to another embodiment of the invention. As shown in FIG. 3, reference d, an advanced contents recording area 21 in FIG. 3, reference c is configured to include a moving picture recording area 21B for recording moving picture data, an animation/still picture recording area 21C for recording animation data and still picture data, an audio recording area 21D for recording audio data, a font recording area 21E for recording font data, and a markup/script language recording area 21A for recording information for controlling playback of these data (such information is described using a markup language/script language/style sheet, and the like) (the area 21A is the head of the recording order of these areas as shown in FIG. 3).

The information for controlling playback (recording contents in the area 21A) describes a playback method (display method, playback sequence, playback switching sequence, selection of objects to be played back, etc.) of advanced contents (including audio, still picture, font/text, moving picture, animation, and the like) and/or DVD-Video contents using a markup language, script language, and style sheet. For example, markup languages such as hypertext markup language (HTML)/ extensible hypertext markup language (XHTML), synchronized multimedia integration language (SMIL), and the like, script languages such as European computer manufacturers association script (ECMAScript), JavaScript (Java is the registered trade name), and the like, style sheets such as cascading style sheets (CSS), and the like, and so forth, may be used in combination.

The markup/script language recording area 21A includes a startup recording area 210A for recording startup information, a loading information recording area 211A for recording information of files to be loaded onto a buffer in a playback apparatus, a playback sequence information recording area 215A for defining the playback order of video for playing back the HD_DVD video stored in the expansion video object sets of the advanced title sets using a markup language or script language, a markup language recording area 212A for recording the aforementioned markup languages, a script recording area 213A for recording the aforementioned script languages, and a style sheet recording area 214A for recording the aforementioned style sheets.

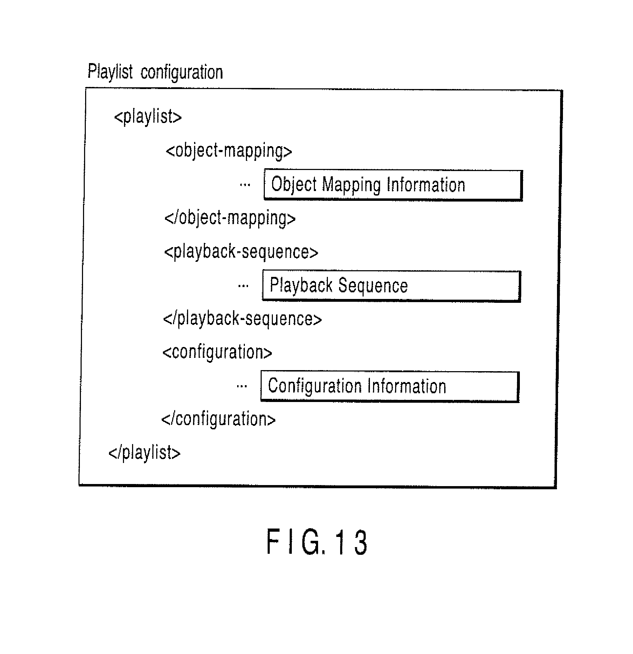

Note that the loading information recording area 211A and playback sequence information recording area 215A shown in FIG. 3, reference e can be used as the area for storing playlist information to be described later with reference to, e.g., FIG. 13.

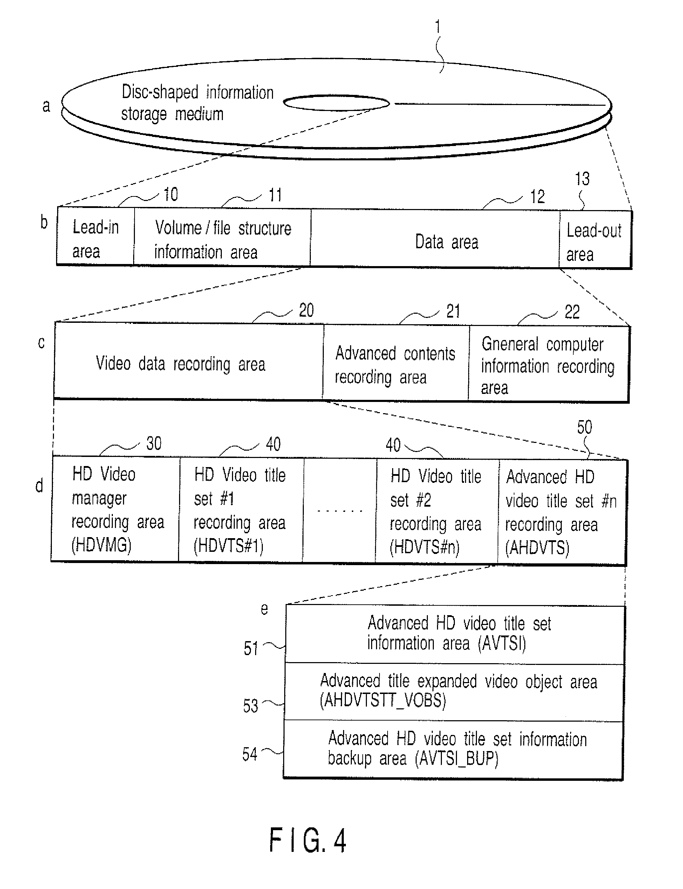

FIG. 4 is an exemplary view for explaining an example of the recording contents of an advanced HD video title set recording area of the information contents recorded on a disk-shaped information storage medium (optical disc, etc.) 1 according to still another embodiment of the invention. An advanced HD video title set (AHDVTS: advanced VTS) shown in FIG. 4, reference d is a video object which is specialized to be referred to from a markup language as one of the aforementioned advanced contents.

As shown in FIG. 4, reference e, an advanced HD video title set (AHDVTS) recording area 50 includes an advanced HD video title set information (AHDVTSI) area 51 that records management information for the contents in the advanced HD video title set recording area 50, an advanced HD video title set information backup area (AHDVTSI_BUP) 54 that records the same information as in the HD video title set information area 51 as backup data, and an advanced title video object area (AHDVTSTT_VOBS) 53 that records video object (title picture information) data in an advanced HD video title set.

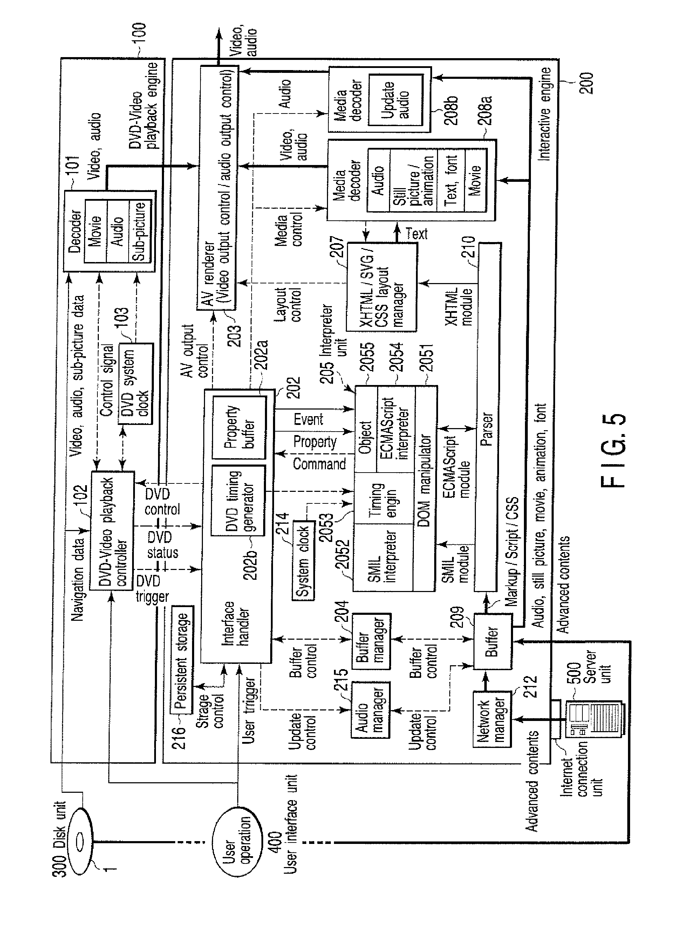

FIG. 5 is an exemplary block diagram for explaining an example of the internal structure of a playback apparatus (advanced VTS compatible DVD-Video player) according to still another embodiment of the invention. This DVD-Video player plays back and processes the recording contents from the information storage medium 1 as in FIGS. 1, 3, 4, and the like, and downloads and processes advanced contents from a communication line (e.g., the Internet or the like).

The DVD-Video player shown in FIG. 5 includes a DVD-Video playback engine (DVD_ENG) 100, interactive engine (INT_ENG) 200, disc unit (disc drive) 300, user interface unit 400, and the like. The DVD-Video playback engine 100 plays back and processes an MPEG2 program stream (DVD-Video contents) recorded on an information storage medium 1. The interactive engine (INT_ENG) 200 plays back and processes advanced contents. The disc unit 300 reads out the DVD-Video contents and/or advanced contents recorded on the information storage medium 1. The user interface unit 400 supplies an input by the user of the player (user operation) to the DVD-Video player as a user trigger.

Basically, when a standard VTS is to be played back (standard VTS playback state), the user input is supplied to the DVD-Video playback engine; when an advanced VTS is to be played back (advanced VTS playback state), the user input is supplied to the interactive engine. Even when the advanced VTS is to be played back, a predetermined user input can be directly supplied to the DVD-Video playback engine.

The interactive engine (INT_ENG) 200 includes an Internet connection unit. This Internet connection unit serves as communications link that connects the server unit 500 or the like via a communication line (Internet or the like). Furthermore, the interactive engine (INT_ENG) 200 is configured to include a buffer unit 209, parser 210, XHTML/SVG/CSS layout manager 207, ECMAScript interpreter/DOM manipulator/SMIL interpreter/timing engine/object (interpreter unit) 205, interface handler 202, media decoders 208a/208b, AV renderer 203, buffer manager 204, audio manager 215, network manager 212, system clock 214, persistent storage 216, and the like.

In the block arrangement of FIG. 5, a DVD-Video playback controller 102, DVD-Video decoder 101, DVD system clock 103, interface handler 202, parser 210, interpreter unit 205, XHTML/SVG/CSS layout manager 207, AV renderer 203, media decoders 208a/208b, buffer manager 204, audio manager 215, network manager 212, system clock 214, and the like can be implemented by a microcomputer (and/or hardware logic) which serves as the functions of respective blocks by an installed program (firmware; not shown). A work area used upon executing this firmware can be assured using a semiconductor memory (and a hard disk as needed; not shown) in the block arrangement.

The DVD-Video playback engine (DVD_ENG) 100 is a device for playing back DVD-Video contents recorded on the information storage medium 1 shown in FIG. 1 and the like, and is configured to include the DVD-Video decoder 101 for decoding the DVD-Video contents loaded from the disc unit 300, the DVD-Video playback controller 102 for making playback control of the DVD-Video contents, the DVD system clock 103 for determining the decode and output timings in the DVD-Video decoder, and the like.

The DVD-Video decoder 101 has a function of decoding main picture data, audio data, and sub-picture data read out from the information storage medium 1 shown in FIG. 1 and the like, and outputting the decoded video data (obtained by mixing the main picture data and sub-picture data, etc.) and audio data. That is, the player shown in FIG. 5 can play back video data, audio data, and the like with the MPEG2 program stream structure in the same manner as a normal DVD-Video player.

In addition, the DVD-Video playback controller 102 can control playback of the DVD-Video contents in accordance with a "DVD control signal" output from the interactive engine (INT_ENG) 200. More specifically, when a given event (e.g., menu call or title jump) has occurred in the DVD-Video playback engine 100 upon DVD-Video playback, the DVD-Video playback controller 102 can output a "DVD trigger" signal indicating the playback condition of the DVD-Video contents to the interactive engine (INT_ENG) 200. In this case (simultaneously with output of the DVD trigger signal or at an appropriate timing before and after the output), the DVD-Video playback controller 102 can output a "DVD status" signal indicating property information (e.g., an audio language, sub-picture subtitle language, playback operation, playback position, various kinds of time information, disc contents, and the like set in the player) of the DVD-Video player to the interactive engine (INT_ENG) 200.

The interface handler 202 receives a "user trigger" corresponding to a user operation (menu call, title jump, play start, play stop, play pause, or the like) from the user interface unit 400. The interface handler 202 transmits the received user trigger to the interpreter unit 205 as a corresponding "event". For example, the markup language describes the following instructions for this "event".
1. issue a "command" corresponding to a user operation. That is, the same command as the user operation is transmitted to the DVD-Video playback engine as a DVD control signal.
2. issue a "command" different from a user operation. That is, the user action is substituted by another operation in accordance with an instruction of the markup language.
3. ignore user trigger. That is, a user event is inhibited since, for example, the user may designate a DVD-Video playback process which is not designed by the content provider.

Note that the contents of the user trigger signal transmitted to the interface handler 202 may be transmitted to the AV renderer 203 as an "AV output control" signal. As a result, for example, when the user has changed the contents or window size or has shifted its display position using a cursor key of a remote controller (not shown), a user trigger signal based on this operation is output to the AV renderer 203 as a corresponding AV output control signal. In addition, when a user trigger signal which indicates switching between a video/audio output from the DVD-Video playback engine 100 and that from the interactive engine 200 is sent to the AV renderer 203, the video/audio output can be switched in response to the user operation.

The interface handler 202 exchanges a "DVD status" signal, "DVD trigger" signal, and/or "DVD control" signal with the DVD-Video playback controller 102, or exchanges a "user trigger" signal with the user interface unit 400. Furthermore, the interface handler 202 exchanges "event", "property", "command", and "control'" signals with the interpreter unit 205.

That is, the interface handler 202 can do the following.
1. The interface handler 202 transmits a "DVD trigger" signal which indicates the operation of the DVD-Video playback engine 100 from the DVD-Video playback engine 100, or a "user trigger" which indicates the user operation from the user interface unit 400 to the interpreter unit 205 as an "event".
2. The interface handler 202 transmits a "DVD status" signal which indicates the playback status of the DVD-Video playback engine 100 from the DVD-Video playback engine 100 to the interpreter unit 205 as a "property". At this time, DVD status information is saved in a property buffer 202a of the interface handler 202 as needed.
3. The interface handler 202 outputs a "DVD control" signal used to control playback of the DVD-Video playback engine 100 to the DVD-Video playback engine 100, an "AV output control" signal used to switch video and audio data to the AV renderer 203, a "buffer control" signal used to load/erase the contents of the buffer 209 to buffer manager 204, an "update control" signal used to download update audio data to the audio manager 215, and a "media control" signal used to instruct decoding of various media to the media decoders 208a/208b, in accordance with the contents of a "command" signal from the interpreter unit 205.
4. The interface handler 202 measures information of the DVD system clock 103 in the DVD-Video playback engine 100 using a DVD timing generator 202b of the interface handler 202, and transmits the measurement result to the media decoders 208a/208b as a "DVD timing" signal. That is, the media decoders 208a/208b can decode various media in synchronism with the system clock 103 of the DVD-Video playback engine 100.

As described above, the interface handler 202 has a function of parsing and interpreting advanced contents, and then exchanging control signals and the like between the DVD-Video playback engine 100 and the interactive engine 200.

The interface handler 202 is configured to exchange a first signal and also a second signal on the basis of the contents which are parsed by the parser 210 and are interpreted by the interpreter unit 205, or a user trigger from an input device (e.g., a remote controller; not shown). In other words, the interface handler 202 controls the output states of video and audio signals by the AV renderer 203 on the basis of at least one of the first signal exchanged with the DVD-Video playback controller 102, and the second signal exchanged with the interpreter unit 205.

Note that the first signal pertains to the playback status of the information storage medium 1, and corresponds to the "DVD control" signal, "DVD trigger" signal, "DVD status" signal, and the like. The second signal pertains to the contents of the advanced contents, and corresponds to the "event" signal, "command" signal, "property" signal, "control" signal, and the like.

The interface handler 202 is configured to execute processes corresponding to user triggers in accordance with the markup language. The AV renderer 203 is configured to mix video/audio data generated by the media decoders 208a/208b with that played back by the DVD-Video playback engine 100 on the basis of the execution results of the processes corresponding to user triggers, and to output mixed data. Alternatively, the AV renderer 203 is configured to select one of video/audio data generated by the media decoders 208a/208b and that played back by the DVD-Video playback engine 100 on the basis of the execution result of the "command" in the interface handler 202, and to output the selected video/audio data.

Generally speaking, the parser 210 parses the markup language indicating playback control information, which is included in advanced contents acquired from the information storage medium 1 or advanced contents downloaded from the Internet or the like. The markup language is configured by a combination of markup languages such as HTML/XHTML, SMIL, and the like, script languages such as ECMAScript, JavaScript, and the like, and style sheet such as CSS and the like, as described above. The parser 210 has a function of transmitting an ECMAScript module to an ECMAScript interpreter, an SMIL module to an SMIL interpreter of the interpreter unit 205, and an XHTML module to the XHTML/SVG/CSS layout manager 207 in accordance with the parsing result.

The ECMAScript interpreter interprets the aforementioned ECMAScript module and follows its instruction. That is, the ECMAScript interpreter has a function of issuing a "command" signal used to control respective functions in the interactive engine 200 to the interface handler 202 in correspondence with an "event" signal sent from the interface handler 202 or a "property" signal read from the property buffer 202a of the interface handler 202. At this time, the ECMAScript interpreter issues a "command" signal to the DVD-Video playback engine 100 or a "media control" signal to the media decoders 208a/208b at the timings designated by the markup language in accordance with the time measured by the system clock 214. In this manner, the control operation of the DVD-Video playback engine 100 and various media control operations (decode control of audio, still picture/animation, text/font, and movie, etc.) can be achieved.

The SMIL timing engine interprets the aforementioned SMIL module and follows its instruction. That is, the SMIL timing engine has a function of issuing a "control" signal to the interface handler 202 or media decoders 208a/208b in correspondence with an "event" signal sent from the interface handler 202 or a "property" signal read from the property buffer 202a of the interface handler 202 in accordance with the system clock 214. With this function, control of the DVD-Video playback engine 100 and decoding of various media (audio, still picture/animation, text/font, movie) can be achieved at desired timings. That is, the SMIL timing engine can operate based on the system clock 214 in accordance with the description of the markup language, or can operate on the basis of the DVD system clock 103 from the DVD timing generator 202b.

The XHTML/SVG/CSS layout manager 207 interprets the aforementioned XHTML module and follows its instruction. That is, the XHTML/SVG/CSS layout manager 207 outputs a "layout control" signal to the AV renderer 203. The "layout control" signal includes information associated with the size and position of a video screen to be output (this information often includes information associated with a display time such as display start, end, or continuation), and information associated with the level of audio data to be output (this information often includes information associated with an output time such as output start, end, or continuation). Also, text information to be displayed, which is included in the XHTML module, is sent to the media decoders 208a/208b, and is decoded and displayed using desired font data.

Practical methods of parsing and interpreting markup and script languages can adopt the same methods as parsing/interpretation in state-of-the-art techniques such as HTML/XHTML, SMIL, and the like or ECMAScript, JavaScript, and the like (the hardware used is the microcomputer that has been mentioned at the beginning of the description of FIG. 5). Note that commands and variables described in scripts are different since objects to be controlled are different. The markup language used upon practicing the invention uses unique commands and variables associated with playback of the DVD-Video contents and/or advanced contents. For example, a command that switches the playback contents of the DVD-Video contents or advanced contents in response to a given event is unique to the markup or script language used in the embodiment of the invention.

As another example of commands and variables unique to the markup or script language, those which are used to change the video size from the DVD-Video playback engine 100 and/or interactive engine 200 and to change the layout of that video data are available. A change in video size is designated using a size change command and a variable that designates the size after change. A change in video layout is designated by a display position change command and a variable that designates the coordinate position or the like after change. When objects to be displayed overlap on the screen, variables that designate depth ordering and transparency upon overlapping are added.

As still another example of commands and variables unique to the markup or script language, those which are used to change the audio level from the DVD-Video playback engine 100 and/or interactive engine 200 or to select an audio language to be used are available. A change in audio level is designated by an audio level change command and a variable that designates an audio level after change. An audio language to be used is selected by an audio language change command and a variable that designates the type of language after change. As yet another example, those which are used to control user triggers from the user interface unit 400 are available.

On the basis of the commands/variables of the markup and script languages, as exemplified above, a "layout control" signal is sent from the XHTML/SVG/CSS layout manager 207 (some functions are often implemented by the SMIL timing engine 206) to the AV renderer 203. The "layout control" signal controls the layout on the screen, size, output timing, and output time of video data to be displayed on, e.g., an external monitor device or the like (not shown), and/or the tone volume, output timing, and output time of audio data to be played back from an external loudspeaker (not shown).

The media decoders 208a/208b decode data of the advanced contents such as audio data, still picture (including a background picture)/animation, text/font data, movie data, and the like included in the advanced contents. That is, each of the media decoders 208a/208b includes an audio decoder, still picture/animation decoder, text/font decoder, and movie decoder in correspondence with objects to be decoded. For example, audio data in the advanced contents, which is encoded by, e.g., MPEG, AC-3, or DTS is decoded by the audio decoder and is converted into non-compressed audio data. Still picture data or background picture data, which is encoded by JPEG, GIF, or PNG, is decoded by the still picture decoder, and is converted into non-compressed picture data. Likewise, movie or animation data, which is encoded by MPEG2, MPEG4, MacromediaFlash, or SVG (Scalable Vector Graphics), is decoded by the movie or animation decoder, and is converted into non-compressed movie/animation data. Text data included in the advanced contents is decoded by the text/font decoder using font data (e.g., OpenType format) included in the advanced contents, and is converted into text picture data which can be superimposed on a movie or still picture. Video/audio data, which includes these decoded audio data, picture data, animation movie data, and text picture data as needed, is sent from the media decoders 208a/208b to the AV renderer 203. These advanced contents are decoded in accordance with an instruction of a "media control" signal from the interface handler 202 and in synchronism with a "DVD timing" signal from the interface handler 202 and a "timing" signal from the system clock 214.

The AV renderer 203 has a function of controlling a video/audio output. More specifically, the AV renderer 203 controls, e.g., the video display position and size (often including the display timing and display time together), and the audio level (often including the output timing and output time together) in accordance with the "layout control" signal output from the XHTML/SVG/CSS layout manager 207. Also, the AV renderer 203 executes pixel conversion of video data in accordance with the type of designated monitor and/or the type of video data to be displayed. The video/audio outputs to be controlled are those from the DVD-Video playback engine 100 and media decoders 208a/208b. Furthermore, the AV renderer 203 has a function of controlling mixing and switching of the DVD-Video contents and advanced contents in accordance with an "AV output control" signal output from the interface handler 202.

Note that the interactive engine 200 in the DVD-Video player in FIG. 5 includes an interface for sending the markup language in the advanced contents read from the information storage medium 1 to the parser 210 via the buffer unit 209, and an interface for sending data (audio data, still picture/animation data, text/font data, movie data, and the like) in the read advanced contents to the media decoders 208a/208b via the buffer unit 209. These interfaces form an interface (first interface) independent from the Internet connection unit in FIG. 5.

Also, the DVD-Video player in FIG. 5 includes an interface for receiving advanced contents from a communication line such as the Internet or the like, and sending the markup language in the received advanced contents to the parser 210 via the buffer unit 209, and an interface for sending data (audio data, still picture/animation data, text/font data, movie data, and the like) in the received advanced contents to the media decoders 208a/208b via the buffer unit 209. These interfaces form the Internet connection unit (second interface) shown in FIG. 5.

The buffer unit 209 includes a buffer that stores the advanced contents downloaded from a server unit 500, and also stores the advanced contents read from the information storage medium 1 via the disc unit 300. The buffer unit 209 reads the advanced contents stored in the server unit 500, and downloads them via the Internet connection unit under the control of the buffer manager 204 based on the markup language/script language.

Also, the buffer unit 209 loads the advanced contents recorded on the information storage medium 1 under the control of the buffer manager 204 based on the markup language/script language. At this time, if the disc unit 300 is a device that can access the disc at high speed, the disc unit 300 can read out the advanced contents from the information storage medium 1 while playing back the DVD-Video contents, i.e., reading out DVD-Video data from the information storage medium 1.

If the disc unit 300 is not a device that can make high-speed access, or if the playback operation of the DVD-Video contents is to be guaranteed, playback of the DVD-Video contents should not be interrupted. In such case, the advanced contents are read out from the information storage medium 1 and are stored in the buffer in advance prior to the beginning of playback. In this way, since the advanced contents are read out from the buffer simultaneously when the DVD-Video contents are read out from the information storage medium 1, the load on the disc unit 300 can be reduced. Hence, the DVD-Video contents and advanced contents can be simultaneously played back without interrupting playback of the DVD-Video contents.

In this manner, since the advanced contents downloaded from the server unit 500 are stored in the buffer unit 209 in the same manner as those recorded on the information storage medium 1, the DVD-Video contents and advanced contents can be simultaneously read out and played back.

The buffer unit 209 has a limited storage capacity. That is, the data size of the advanced contents that can be stored in the buffer unit 209 is limited. For this reason, it is possible to erase the advanced contents with low necessity and to save those with high necessity under the control of the buffer manager 204 (buffer control). The buffer unit 209 can automatically execute such save control and erase control.

Furthermore, the buffer unit 209 has a function (preload end trigger, load end trigger) of loading contents requested by the buffer manager 204 from the disc unit 300 or server unit 500 onto the buffer unit 209 and informing the buffer manager 204 that the advanced contents designated by the buffer manager 204 have been loaded onto the buffer.

The buffer manager 204 can send the following instructions as "buffer control" to the buffer unit 209 in accordance with an instruction of the markup language (even during playback of DVD video contents).
-- load all or part of a specific file from a server;
-- load all or part of a specific file from a disc; and
-- erase all or part of a specific file from a buffer.

Furthermore, the buffer manager 204 instructs the buffer unit 209 to load the advanced contents in accordance with loading information, which is described in the markup language (or in a file designated by the markup language). The buffer manager 204 has a function (buffer control) of requesting to inform that specific advanced contents described in loading information have been loaded onto the buffer unit 209.

Upon completion of loading of the specific advanced contents onto the buffer unit 209, the buffer unit 209 informs the buffer manager 204 of it, and the buffer manager informs the interface handler 202 of it (preload end trigger, load end trigger).

The audio manager 215 has a function of issuing an instruction for loading update audio data (audio commentary data) from the information storage medium 1 in the disc unit 300 or the server unit 500 onto the buffer unit 209 in accordance with an instruction of the markup language (update control).

The network manager 212 controls the operation of the Internet connection unit. That is, the network manager 212 switches connection/disconnection of the Internet connection unit when the markup language designates connection or disconnection to or from the network as a "command". Also, the network manager 212 has a function of checking the connection state to the network, and allows the markup language to download the advanced contents in accordance with the connection state to the network.

The persistent storage 216 is an area for recording information (information set by the user and the like) associated with the information storage medium 1, and includes a nonvolatile storage medium such as a hard disk, flash memory, or the like. That is, even after the power supply of the DVD player is turned off, this information is held.

As information associated with the information storage medium to be played back, information such as the playback position of the DVD-Video contents or advanced contents, user information used in user authentication implemented by the advanced contents, a game score of a game implemented by the advanced contents, and the like are recorded in accordance with an instruction of the markup language (storage control). As a result, when the information storage medium is played back at a later time, playback can be continued from the previous position. When the advanced contents downloaded from the server onto the buffer are recorded in the persistent storage 216 upon playing back the information storage medium, the information storage medium can be played back without connecting the network from the next time.

The building components of the interactive engine 200 in FIG. 5 can also be summarized as follows. That is, the interactive engine 200 includes:
-- Parser 210: The parser 210 parses the contents of the markup language.
-- Interpreter unit 205, XHTML/SVG/CSS layout manager 207: The interpreter unit 205 which includes the ECMAScript interpreter, SMIL timing engine, and the like, and the XHTML/SVG/CSS layout manager 207 respectively interpret the parsed modules.
-- Interface handler 202: The interface handler 202 handles control signals from the interpreter unit 205, and those from the DVD-Video playback controller 102.
-- Media decoders 208a/208b: The media decoders 208a/208b generate video/audio data corresponding to audio data, still picture data, text/font data, movie data, and the like included in the advanced contents in synchronism with the system clock 103 of the DVD playback engine 100 or the system clock 214 of the Interactive engine 200.
-- AV renderer 203: The AV renderer 203 outputs data obtained by mixing video/audio data generated by the media decoders 208a/208b to that played back by the DVD-Video playback engine 100 on the basis of the execution result of the "command" in the interface handler 202. Or the AV handler 203 selectively outputs one of video/audio data generated by the media decoders 208a/208b and that played back by the DVD-Video playback engine 100 on the basis of the execution result of the "command" in the interface handler 202.
-- Buffer unit 209: The buffer unit 209 temporarily stores the advanced contents acquired from the disc unit 300 or from the server unit 500 via the Internet connection unit.
-- Buffer manager 204: The buffer manager 204 loads or erases advanced contents data to or from the buffer unit 209 in accordance with an instruction from the interface handler 202 (an instruction of the markup language), or the description of loading information.
-- Network manager: The network manager controls connection or disconnection to or from the network and checks the connection state in accordance with an instruction of the markup language.
-- Persistent storage 216: The persistent storage holds information associated with the information storage medium such as the playback position of the contents, user information, and the like, and also the advanced contents downloaded from the server unit 500.

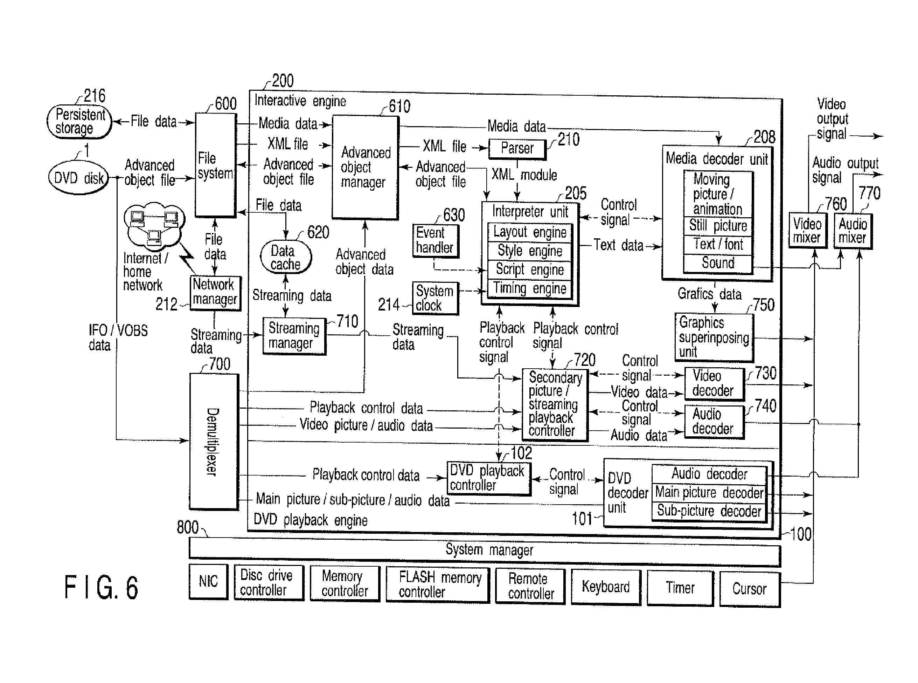

FIG. 6 is a system block diagram for explaining an example of the internal structure of a playback apparatus (advanced VTS compatible DVD-Video player: another example of the apparatus shown in FIG. 5) according to another embodiment of the invention. This DVD-Video player plays back and processes the recording contents (DVD-Video contents and/or advanced contents) from the information storage medium 1 shown in FIGS. 1, 3, and the like, and downloads and processes advanced contents from a communication line (e.g., the Internet/home network or the like).

In the system arrangement of the embodiment shown in FIG. 6, an interactive engine 200 includes a parser 210, an advanced object manager 610, a data cache 620, a streaming manger 710, an event handler 630, a system clock 214, an interpreter unit 205 including a layout engine, style engine, script engine, and timing engine, a media decoder unit 208 including moving picture/animation, still picture, text/font, and sound decoders, a graphics superposing unit 750, a secondary picture/streaming playback controller 720, a video decoder 730, an audio decoder 740, and the like.

On the other hand, a DVD playback engine 100 includes a DVD playback controller 102, the DVD decoder unit 101 including an audio decoder, main picture decoder, sub-picture decoder, and the like, and so forth.

The DVD-Video player includes, as functional modules to be provided to the interactive engine 200 and DVD playback engine 100, a persistent storage 216, the DVD disc 1, a file system 600, a network manager 212, a demultiplexer 700, a video mixer 760, an audio mixer 770, and the like. Also, as modules which are the functions of the DVD-Video player and are mainly used by the interactive engine 200 to perform information acquisition and operation control via a system manager 800, the player includes an NIC, disc drive controller, memory controller, flash memory controller, remote controller, keyboard, timer, cursor, and the like.

The recording locations and formats of advanced contents other than DVD-Video data to be handled by the interactive engine 200 are as follows (note that a disc described as a DVD disc includes not only a normal DVD-Video disc but also a next-generation HD_DVD disc):
1. file format data on the DVD disc;
2. multiplexed divided data in an EVOB on the DVD disc;
3. file format data in the persistent storage of the DVD-Video player; and
4. file format data or streaming data on a network server on the Internet/home network.

"File format data on the DVD disc" of "1." is stored in the advanced contents recording area. The interactive engine 200 loads an advanced contents file on the DVD disc via the file system.

"Multiplexed divided data in an EVOB on the DVD disc" of "2." has a data format which is multiplexed and recorded in a VTS_EVOBS recorded in the advanced HD video title set recording area (AHDVTS). As the multiplexed data, data redundant to "file format data on the DVD disc" of "1." are recorded. Such data is loaded to the demultiplexer 700 in correspondence with loading of the VTS_EVOBS, and if the demultiplexed data are divided data of advanced contents, they are sent to the advanced object manager 610.

The advanced object manager 610 temporarily stores the divided data of the advanced contents received from the demultiplexer 700, and stores them as file format data of the advanced contents in the data cache 620 at the reception timing of data that can form one file.

As multiplexed advanced contents data in an EVOB on the DVD disc, file data obtained by compressing one or a plurality of advanced contents files in accordance with a predetermined method may be divisionally stored, so as to improve the efficiency of data upon multiplexing. In this case, the advanced object manager 610 temporarily stores divided data until the compressed data can be decompressed, and stores decompressed advanced contents data in the data cache 620 at a timing at which the advanced contents data can be handled as a file format.

"File format data in the persistent storage 216 of the DVD-video player" of "3." corresponds to, e.g., introduction movie data of a new film or the like which is downloaded from the Internet and is stored at a predetermined position on the persistent storage 216 while the interactive engine 200 is playing back a DVD title including advanced contents created by a given movie company.

For example, when a DVD title including other advanced contents created by that movie company is played back, the following use method may be adopted. That is, "the interactive engine 200 searches the predetermined position on the persistent storage 216 in accordance with the description of the markup/script language of advanced contents. If the interactive engine 200 finds the saved introduction movie data of the new film there, it jumps to an XML page used to refer to/play back that data. If the playback process is selected by a user operation, the interactive engine 200 plays back the introduction movie data of the new film stored in the persistent storage 216."

An example of file format data of "file format data or streaming data on a network server on the Internet/home network" of "4." corresponds to the aforementioned introduction movie data of the new film or the like. As an example of streaming data, the following use method may be adopted. For example, when the DVD-Video data of a movie on a DVD disc includes only Japanese and English audio data, a movie company creates Chinese audio data, and a DVD-Video player connected to the Internet downloads and plays back the Chinese audio data in synchronism with video picture data on the DVD disc.

In the system block diagram of FIG. 6, the file system 600, parser 210, interpreter unit 205, media decoder unit 208, data cache 620, network manager 212, streaming manager 710, graphics superposing unit 750, secondary picture/streaming playback controller 720, video decoder 730, audio decoder 740, demultiplexer 700, DVD playback controller 102, DVD decoder unit 101, and the like can be implemented by a microcomputer and/or hardware logic which implement/implements respective module functions by parsing built-in programs (firmware; not shown). A work area (including a temporary buffer used in a decoding process) used upon executing this firmware can be assured using a semiconductor memory (not shown) (and a hard disk device as needed) of each module. Furthermore, the system includes communication circuits for control signals (not shown) between respective modules so as to attain data supply and a synchronization process, and to manage operation control between modules. The communication circuits include signal lines of the hardware logic, event/data notification processes between software programs, and the like.

The behaviors for respective functions of the DVD-Video player will be described below using the system block diagram of FIG. 6. In one embodiment the DVD-Video player that plays back advanced contents implements richly expressive menus and more interactive playback control, which are difficult to attain in the conventional DVD, using an XML file and style sheet described using the markup/script language or the like. An example in which a menu page including a button selection that outputs an animation effect or effect sound upon selection of the user is to be configured will be examined.

The configuration and functions of the menu page are defined by a menu XML page described using the markup/script language. The menu XML page is stored in a DVD disc, and the interpreter unit 205 passes the contents of the menu XML page parsed by the parser 210 to the layout engine, style engine, script engine, timing engine, and the like in accordance with their description contents.

The timing engine receives time events from the system clock 214 at predetermined intervals, and instructs processing instructions to the layout engine, style engine, and script engine on the basis of the description of the menu XML page arranged in the timing engine. These engines refer to configuration information of the menu XML page managed by them, and issue decode process instructions to the media decoder unit 208 as needed.

The media decoder unit 208 loads media data from the advanced object save area such as the data cache 620 or the like as needed in accordance with instructions from the interpreter unit 205, and executes decode processes.

Of data decoded by the media decoder unit 208, moving picture/animation, still picture, and text/font output results associated with graphics display are sent to the graphics superposing unit 750, which generates frame data of a graphics plane to be output in accordance with the descriptions of the layout and style sheet of the interpreter unit 205, and outputs it to the video mixer 760.

The video mixer 760 mixes the output frame of the graphics superposing unit 750, an output frame of the video decoder which is output in accordance with an instruction from the secondary picture/streaming playback controller 720, output frames of the main picture decoder and sub-picture decoders in the DVD decoder unit 101 which are output in accordance with an instruction from the DVD playback controller 102, an output frame of the cursor function of the DVD-Video player, and the like in accordance with a predetermined superposing rule while synchronizing these output frames. The video mixer 760 converts the mixed output frame data into a television output signal, and outputs it onto a video output signal line.

The behavior of the secondary picture/streaming playback controller 720 which is output in synchronism with the output frame of the graphics frame will be described below. As a main storage destination of secondary picture data, a DVD disc and streaming server on the Internet or home network are assumed.

Upon playback of secondary picture data stored on the DVD disc, IFO/VOBS (including an EVOBS) data is loaded from the DVD disc to demultiplexer 700. The demultiplexer 700 identifies various types of multiplexed data, and demultiplexes and sends data associated with main picture playback control to the DVD playback controller 102, data associated with main picture, sub-picture, and audio of the DVD-Video to the DVD decoder unit 101, and data associated with secondary picture playback control to the secondary picture/streaming playback controller 720. If advanced object data are multiplexed and stored in this data, these data are sent to the advanced object manager 610.

The secondary picture/streaming playback controller 720 executes playback control of secondary picture data on the DVD disc on the basis of a playback control signal from the interpreter unit 205. For example, when the interpreter unit 205 instructs not to execute playback of stored secondary picture data, data can be discarded here. When a playback instruction is issued, the secondary picture/streaming playback controller 720 outputs data shaped to a format and data size suited to decode processes to the video decoder 730 and audio decoder 740. The video decoder 730 and audio decoder 740 execute decode processes while synchronizing their output timings with the output from the DVD decoder unit 101, in accordance with an instruction from the secondary picture/streaming playback controller 720.

Control signals instructed by the secondary picture/streaming playback controller 720 include instructions of the video position, the degree of scaling, that of a transparency process, a chroma color process, and the like to the video decoder 730, and a volume control instruction, channel mixing instruction, and the like to the audio decoder 740.

When the user designates fastforwarding, jump, or the like via a remote controller or the like, the event handler 630 acquires an event from the remote controller, and notifies the script engine of the interpreter unit 205 of that event. The script engine runs in accordance with the markup/script description of an XML file used to execute playback control, and confirms the presence/absence of an event handler of the remote controller process. If the XML file used to execute the playback control defines an explicit behavior, the script engine executes a process according to the description; if nothing is defined, it executes a predetermined process.

When fastforwarding is to be executed as a result of the user's remote controller process, the interpreter unit 205 instructs the DVD playback controller 102 and secondary picture/streaming playback controller 720 to execute fastforwarding. The DVD playback controller 102 re-configures a read schedule of VOBS data to change a data read process from the DVD disc of the demultiplexer 700 in accordance with the fastforwarding instruction from the interpreter unit 205. In this way, control is made to supply desired data to fastforwarding playback of the DVD playback controller 102 and DVD decoder unit 101 without causing any underflow. Since data to be supplied to the secondary picture/streaming playback controller 720 are stored in correspondence with the main picture data allocation, secondary picture data suited to fastforwarding playback are supplied from the demultiplexer 700 in synchronism with the data read process desired for fastforwarding executed by the DVD playback controller 102.

Upon playing back stream data based on the secondary picture/streaming playback control, the secondary picture/streaming playback controller 720 instructs the streaming manager 710 to read streaming data on a predetermined network server and to supply the read data to itself on the basis of a playback control signal from the interpreter unit 205.

The streaming manager 710 requests the network manager 212 to execute a protocol control process of actual streaming data reception, and acquires data from the network server. At this time, for example, when the bit rate of the streaming data is high, look-ahead cashing of streaming data is made using a streaming buffer area on the data cache 620 which is set in advance based on startup information, thus making control for broadening, e.g., an allowance of reception bit rate variations of streaming data.

In this case, the streaming manager 710 temporarily stores streaming data from the network server in the streaming buffer on the data cache 620, and supplies data stored in the streaming buffer on the data cache 620 in response to a streaming data read request from the secondary picture/streaming playback controller 720. When no streaming buffer is assured on the data cache 620, the streaming manager 710 sequentially outputs streaming data acquired from the network server to the secondary picture/streaming playback controller 720.

When the secondary picture/streaming playback controller 720 performs playback control of streaming data on the network, it need not always perform playback in synchronism with video picture playback of the DVD playback engine 100. For this reason, the secondary picture/streaming playback controller 720 need not play back any streaming data even when the DVD playback engine 100 does not perform any video picture playback, or it need not synchronize the playback state of streaming data with that (e.g., a special playback state such as a fastforwarding state or pause state) of the DVD playback engine 100.

Upon executing the playback process of streaming data read from a streaming server on the network, data supply underflow is likely to occur. In this case, a priority process can be designated in the description of the markup/script language of advanced contents to flexibly define behaviors as follows. For example, the playback process of the DVD playback engine 100 is preferentially executed, and DVD-Video playback is continued even when streaming data is interrupted. Alternatively, playback of streaming data is preferentially executed, and DVD-Video playback is interrupted when streaming data is interrupted. Data to be played back by the secondary picture/streaming playback controller 720 may be video data alone or audio data alone.

An example of the functions of respective modules which form the system block diagram of FIG. 6 will be explained below.

Persistent storage 216: It stores generated file data, file data downloaded from the Internet/home network, and the like in accordance with an instruction from the interpreter unit 205. Data stored in the persistent storage 216 are held even when the ON/OFF event of the power switch of the DVD-Video player occurs. The interpreter unit 205 can erase data in the persistent storage 216.

DVD disc 1: It stores advanced contents and DVD-Video data. Sector data on the DVD disc are read in accordance with read requests from the file system and demultiplexer.

File system 600: It manages the file system for respective recording modules/devices, and provides a file access function to file data read/write requests from the advanced object manager and the like. As an example of the file system for respective recording modules/devices, when the persistent storage 216 includes a flash memory, a file system for the flash memory is used to control to average memory rewrite accesses. The DVD disc 1 is accessed using a UDF or IS09660 file system. As for files on the network, the network manager 212 executes actual protocol control such as HTTP, TCP/IP, and the like, and the file system itself relays the file access function to the network manager 212. The file system manages the data cache 620 as, e.g., a RAM disc.

Network manager 212: It provides a read (write as needed) function of file data provided on an HTTP server on the network to the file system. It also executes actual protocol control in accordance with a sequential read request of stream data from the streaming manager 710, acquires the requested data from the streaming server on the network, and passes the acquired data to the streaming manager 710.

Demultiplexer 700: It reads data on the DVD disc in accordance with a read instruction of sector data that store IFO/VOBS data from the DVD playback controller 102 (and the secondary picture/streaming playback controller when secondary picture data alone is played back). As for multiplexed data of the read data, the demultiplexer 700 supplies demultiplexed data to appropriate processing units. The demultiplexer 700 supplies IFO data to the DVD playback controller and secondary picture/streaming playback controller 720. The demultiplexer 700 outputs main picture/sub-picture/audio data associated with DVD-Video stored in a VOBS to the DVD decoder unit 101, and control information (NV_PCK) to the DVD playback controller 102. The demultiplexer 700 outputs control information and picture/audio data associated with secondary picture data to the secondary picture/streaming playback controller 720. When advanced objects are multiplexed in a VOBS, these data are output to the advanced object manager 610.

Parser 210: It parses the markup language described in an XML file and outputs the parsed result to the interpreter unit 205.

Advanced object manager 610: It manages an advanced object file to be handled by the interactive engine 200. Upon reception of an access request to an advanced object file from the parser 210, interpreter unit 205, media decoder unit 208, and the like, the advanced object manager 610 confirms the storage state of file data on the data cache 620 managed by the advanced object manager 610. If the requested file data is stored in the data cache 620, the advanced object manager 610 reads data from the data cache 620, and outputs the file data to a module that issued the read request. If the requested data is not stored in the data cache 620, the advanced object manager 610 reads file data from the DVD disc, a network server on the Internet/home network, or the like, which stores corresponding data, onto the data cache 620, and simultaneously outputs the file data to a module that issued the read request. As for data stored in the persistent storage 216, the advanced object manager 610 does not normally execute any cache process to the data cache 620.

As another principal function of the advanced object manager 610, when multiplexed advanced object data is stored in VOBS data loaded by the demultiplexer 700, the advanced object manager 610 temporarily stores these data output from the demultiplexer 700, and stores them in the data cache 620 at a timing at which they can be stored as file data. When an advanced object file is stored in VOBS data in a format that compresses one or a plurality of files together, the advanced object manager 610 temporarily stores divided data to a size that allows decompression, and then decompresses and stores data in the data cache 620 as file data.

The advanced object manager 610 stores advanced object data in the data cache 620, and timely deletes a file, which becomes unnecessary in playback of the advanced contents of the interactive engine 200, from the data cache 620, in accordance with an instruction from the interpreter unit 205 or a predetermined rule. With this delete process, the data cache area having a limited size can be effectively used in accordance with the progress of playback of the advanced contents.

Interpreter unit 205: This is a module for controlling the behavior of the interactive engine 200. It initializes the data cache 620 and DVD playback controller 102 in accordance with startup information, loading information, or playback sequence information parsed by the parser 210. In the playback process of the advanced contents, the interpreter unit 205 passes layout information, style information, script information, and timing information parsed by the parser 210 to respective processing modules, sends control signals to the media decoder unit 208, secondary picture/streaming playback controller 720, DVD playback controller 102, and the like in accordance with their descriptions, and executes playback control among modules.

Layout engine: The layout engine (one of internal components of the interpreter unit 205) handles information associated with objects used in graphics output of the advanced contents. It manages definitions, attribute information, and layout information on the screen of moving picture/animation, still picture, text/font, sound objects, and the like, and also manages association information with style information about modifications upon rendering.

Style engine: The style engine (one of internal components of the interpreter unit 205) manages information associated with detailed modifications upon rendering of rendering objects managed by the layout engine.

script engine: The script engine (one of internal components of the interpreter unit 205) manages descriptions associated with handler processes that pertain to button depression events from a user interface device (U/I device) such as a remote controller or the like and event messages from the system manager. The event handler 630 defines processing contents upon occurrence of a corresponding event, and the script engine changes parameters of graphics rendering objects, and control of the DVD playback controller 102, secondary picture/streaming playback controller 720, and the like in accordance with its description.

Timing engine: The timing engine (one of internal components of the interpreter unit 205) controls scheduled processes associated with the behavior of graphics rendering objects and playback of secondary picture/streaming data. The timing engine refers to the system clock 214, and when the system clock 214 matches the timing of the scheduled control process, the timing engine controls respective modules to execute the playback process of the advanced contents.

Media decoder unit 208: It executes the decode process of advanced objects in accordance with a control signal from the interpreter unit 205. Media to be handled by the media decoder unit 208 include cell animation that successively plays back still images of PNG/JPEG or the like as moving picture data, vector animation that successively renders vector graphics, and the like. The media decoder unit 208 can handle JPEG, PNG, GIF, and the like as still picture data. Upon rendering text data, the media decoder unit 208 mainly refers to font data such as vector font (open font) and the like and executes rendering of text data designated by the interpreter unit 205. As sound data, those which have relatively short playback times such as PCM, MP3, and the like are assumed. Such sound data is mainly used a sound effect involved in an event such as button clicking or the like. Of the decode results of the media decoder unit 208, the outputs associated with graphics are output to the graphics superposing unit 750. Also, sound outputs are output to the audio mixer 770.

Graphics superposing unit 750: It superposes the outputs of graphics rendering objects output from the media decoder unit 208 in accordance with the descriptions of the layout engine and style engine, and generates output image frame data. Many rendering objects can have transparency process information, and the graphics superposing unit 750 also executes a transparency calculation process of these objects. The generated output image frame data is output to the video mixer 760.

Data cache 620: It is mainly used in two use applications. In one use application, the data cache 620 is used as a file cache of an advanced object file, and temporarily stores an advanced object file on the DVD disc or network. In the other use application, the data cache 620 is used as a buffer of streaming data, and is managed by the streaming manager 710. The allocations and sizes of the data cache used as the file cache and streaming buffer may be described in startup information or the like and may be managed for respective advanced contents, or the data cache may be used to have predetermined allocations.

Streaming manager 710: It manages supply of streaming data between the secondary picture/streaming playback controller 720 and the network manager 212. When the bit rate of streaming data is relatively small and the streaming buffer need not be used, the streaming manager 710 controls the network manager 212 to sequentially supply streaming data acquired from a streaming server to the secondary picture/streaming playback controller 720.

When the bit rate of streaming data is relatively large, the streaming manager 710 can control supply of streaming data using the streaming buffer which is explicitly assured by the producer of advanced contents. The streaming manager 710 stores data to be supplied to the secondary picture/streaming playback controller 720 in the streaming buffer assured on the data cache 620 in accordance with instructions of the streaming buffer size and read-ahead size interpreted by the interpreter unit 205. When the data of the instructed read-ahead size is stored in the stream buffer, the streaming manager 710 begins to supply streaming data to the secondary picture/streaming playback controller 720. At the same time, as soon as a free space of a given size is assured on the streaming buffer, the streaming manager 710 issues a data acquisition request to the streaming server, thus efficiently managing the streaming buffer.

Secondary picture/streaming playback controller 720: It executes playback control of streaming data supplied from the streaming manager 710 and secondary picture data supplied from the demultiplexer 700 in accordance with a playback control signal from the interpreter unit 205.

Video decoder 730: It plays back video picture data supplied from the secondary picture/streaming playback controller 720 in accordance with a control signal from the secondary picture/streaming playback controller 720. When video picture data is secondary picture data supplied from the demultiplexer 700 or when it is instructed to synchronize streaming data with DVD video picture playback, the video decoder 730 decodes data to synchronize the output timing of the DVD decoder unit 101 with its output timing, and outputs decoded data to the video mixer 760.

The video decoder 730 has a chroma color process function for video picture data as its characteristic function. It manages a chroma color area designated by a specific one color or a plurality of colors as a transparent area to form output frame data of the video mixer 760.

Audio decoder 740: It plays back audio data supplied from the secondary picture/streaming playback controller 720 in accordance with a control signal from the secondary picture/streaming playback controller 720. When audio data is that of secondary picture data supplied from the demultiplexer 700 or when it is instructed to synchronize streaming data with DVD video picture playback, the audio decoder 740 decodes data to synchronize the output timing of the DVD decoder unit 101 with its output timing, and outputs decoded data to the audio mixer 770.

DVD playback controller 102: It acquires playback control data of the DVD-Video from demultiplexer 700 on the basis of a playback control signal from the interpreter unit 205, and executes playback control of main picture/sub-picture/audio data of the DVD decoder unit 101.

DVD decoder unit 101: It includes an audio decoder, main picture decoder, sub-picture decoder, and the like, and manages decode processes and output processes while synchronizing respective decoder outputs in accordance with a control signal from the DVD playback controller 102.

Audio decoder: The audio decoder in the DVD decoder unit 101 decodes audio data supplied from the demultiplexer 700 and outputs the decoded data to the audio mixer 770 in accordance with a control signal from the DVD playback controller 102.

Main picture decoder: The main picture decoder in the DVD decoder unit 101 decodes main picture data supplied from the demultiplexer 700 and outputs the decoded data to the video mixer 760 in accordance with a control signal from the DVD playback controller 102.

Sub-picture decoder: The sub-picture decoder in the DVD decoder unit 101 decodes sub-picture data supplied from the demultiplexer 700 and outputs the decoded data to the video mixer 760 in accordance with a control signal from the DVD playback controller 102.

video mixer 760: It receives output frames from the graphics superposing unit 750, the video decoder 730, the main picture decoder and sub-picture decoder in the DVD decoder unit 101, and the cursor module, generates an output frame in accordance with a predetermined superposing rule, and outputs a video output signal. In general, each frame data has transparency information as the whole frame data or at an object or pixel level, and the video mixer 760 superposes output frames from respective modules using such transparency information.

Audio mixer 770: It receives audio data from the media decoder unit 208, the audio decoder 740, and the audio decoder in the DVD decoder unit 101, and generates and outputs an output audio signal in accordance with a predetermined mixing rule.

System manager 800: It can provide an interface for status and control of respective modules in the DVD-Video player. The interpreter unit 205 acquires the status of DVD-Video player or can change the behavior via an application interface (API) or the like provided by the system manager.

Network connection controller (NIC): This is a module that implements a network connection function, and corresponds to an Ethernet controller (Ethernet is the registered trade name) or the like. The NIC provides information such as connection status of a network cable and the like via the system manager.

Disc drive controller: It corresponds to a reading device of a DVD disc, and provides status information such as the presence/absence of a DVD disc on a disc tray, disc type, and the like.

Memory controller: It manages the system memory:
it provides an area to be used as the data cache 620, and executes access management of a work memory used by respective software (firmware) modules.

Flash memory controller: It provides an area used as the persistent storage 216, and executes access management to the flash memory that stores execution codes and the like of respective software (firmware) modules.

Remote controller: It executes remote control of the DVD-Video player, and generates a button depression event of the user to the event handler 630.

Keyboard: It executes keyboard control of the DVD-Video player, and generates a keyboard depression event of the user to the event handler 630.

Timer: It supplies system clocks, and provides a timer function used by the DVD playback engine.

Cursor: It generates a pointer image of the remote controller or the like, and changes the position of the pointer image upon depression of direction keys and the like.

The interpreter unit 205 in FIG. 6 outputs a playback control signal to the DVD playback controller 102. In this playback control signal, a new command is added to the conventional DVD playback control command, thus allowing more flexible playback control. That is, in order to define playback sequence information of an advanced VTS using the aforementioned playback sequence information (which corresponds to the PBSEQ001.XML file in FIG. 2, and is information stored in the playback sequence information recording area 215A in FIG. 3, playback sequence information externally fetched via the Internet or the like, or playback sequence information which is generated by the system firmware when the user freely re-arranges chapter icons and is stored in the persistent storage 216), a command for initializing using the playback sequence information should be issued from the interactive engine 200 to the DVD playback engine 100.

An "InitPBSEQ () command" is a command which is newly defined for the aforementioned purpose, and allows the interpreter unit 205 to notify the DVD playback controller 102 of the playback sequence information of an advanced VTS to be played back and to initialize it. As an argument of the "InitPBSEQ command", sequence information of the PGC number, PTT numbers, and the like as a basis of the playback sequence is given. If the advanced VTS includes a plurality of PGCs, the PGC number specifies a PGC to be selected. The PTT numbers can define the order of chapters to be played back with reference to the PGC_PGMAP number in the PGC designated by the PGC number. Since typically only one advanced VTS is stored on the DVD disc, and typically includes only one title, they need not be designated.

Note that the playback order can be described using cell units, as described above. In this case, the argument of the "InitPBSEQ command" is sequence information of the PGC number and cell numbers. The cell numbers can define the order of cells to be played back with reference to the C_PBIT number in the PGC designated by the PGC number. If the advanced VTS includes only one PGC, the argument of the PGC number in an "InitPBSEQ function" need not be used.

To summarize, the apparatus illustrated in FIG. 6 includes the following elements. That is, the apparatus is includes a video playback engine (100) which plays back expanded video objects (EVOBs) from an information storage medium (disc 1); and an interactive engine (200) which acquires advanced contents as information (e.g., 21A to 21E in FIG. 3) different from the recording contents of a video data recording area from the information storage medium or an external server, and outputs an AV output corresponding to at least one of the playback output of the video playback engine and the contents of the advanced contents in accordance with the description of a markup language.

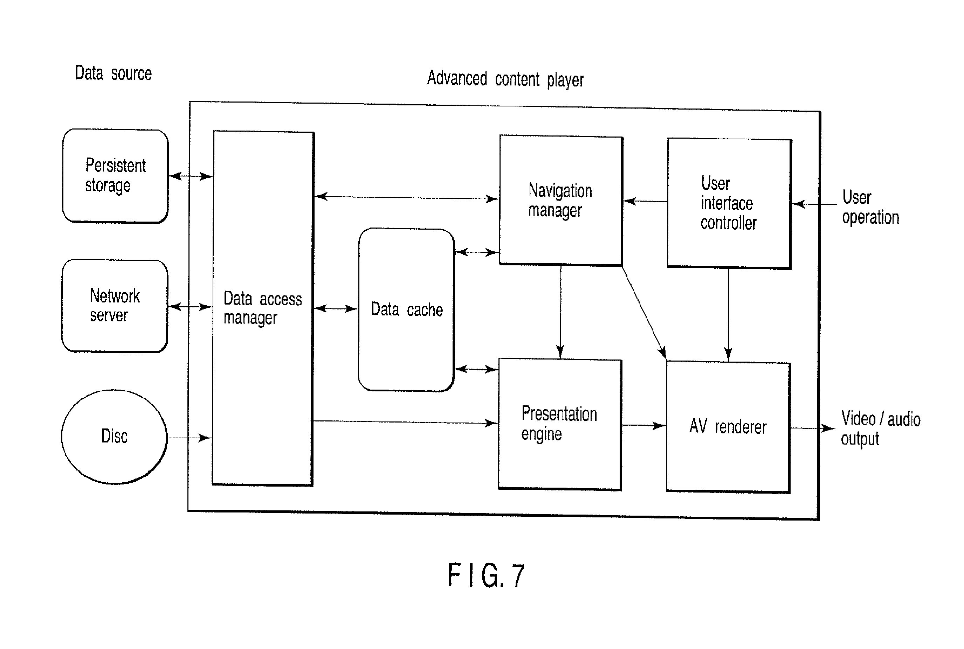

FIG. 7 is an exemplary block diagram showing the functional modules as large units for the playback system model of an HD_DVD player according to an embodiment of the invention. "Data Source" represents a data storage location accessible when the HD DVD player executes playback. "Data Source" includes "Disc", "Persistent Storage", and "Network Server". "Disc" corresponds to a DVD disc 1 in FIG. 6.

"Persistent Storage" corresponds to the persistent storage in FIG. 6. A NAS (Network Attached Storage) or the like present on a home network can also belong to the category of persistent storages. "Network Server" indicates a server present on the Internet. In general, a server managed by a movie picture company which provides a DVD disc can be assumed as the network server.

"Advanced Content Player" represents the whole playback system model of the HD_DVD player. The advanced content player is mainly made up of "Data Access Manager", "Data Cache", "Navigation Manager", "Presentation Engine", "User Interface Controller", and "AV Renderer".

"Data Access Manager" manages data exchange between "Data Source" and the modules in "Advanced Content Player". "Data Cache" is a data storage device which temporarily stores data used by "Navigation Manager" or "Presentation Engine" for playback.

"Navigation Manager" loads and interprets "Advanced Navigation", controls "Presentation Engine", "AV Renderer" and the like, and manages playback control of a content type 2 or 3 disc. "Navigation Manager" loads "Startup File" from a disc when inserting the disk and sets up the HD_DVD player for playback control.

"Presentation Engine" loads, from "Data Source" or "Data Cache", "Primary Video Set" data, "Secondary Video Set" data, and "Advanced Element" data using "Data Access Manager" on the basis of control commands and signals generated by "Navigation Manager" in accordance with playback control information of "Advanced Navigation". "Presentation Engine" then plays back the loaded data and sends its output to "AV Renderer".

"AV Renderer" performs α-blending or mixing of video picture data or audio data output from "Presentation Engine" based on control commands or signals from "Navigation Manager" in accordance with playback control information from "Advanced Navigation". "AV Renderer" finally outputs signals from the HD_DVD player to an external TV monitor or to loudspeakers.

"User Interface Controller" transmits, as an event to "Navigation Manager", a signal input from a front panel or a user interface such as a remote controller or mouse. "User Interface Controller" also controls the display of a mouse cursor.

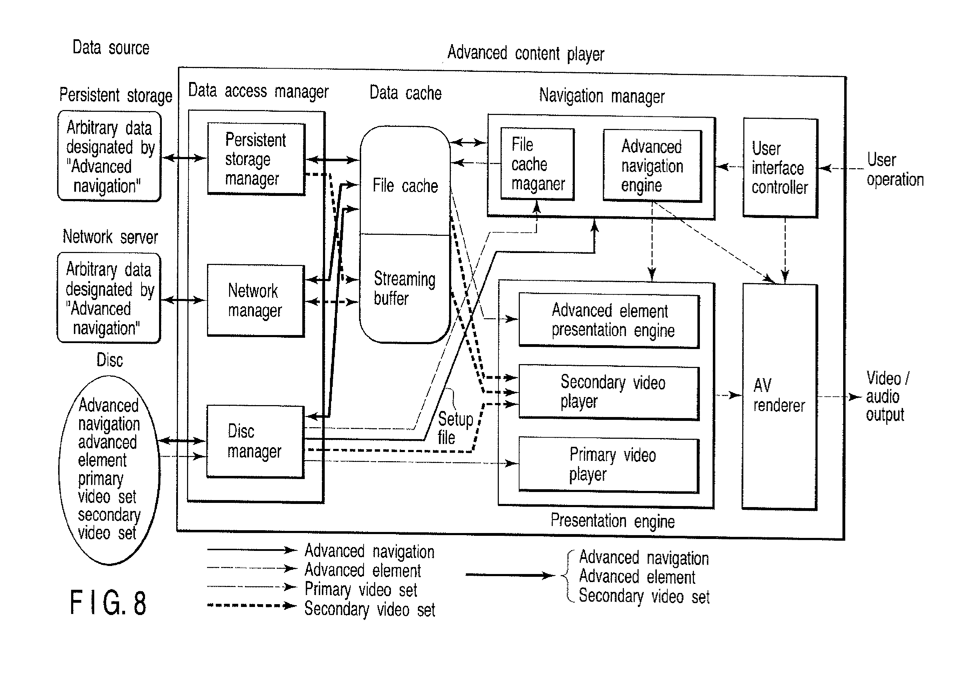

FIG. 8 is a detailed block diagram when FIG. 7 is illustrated from the viewpoint of a data flow. As a result of playback control of "Advanced Navigation", many different kinds of data can be stored in "Persistent Storage" or "Network Manager" as far as its capacity allows. The HD_DVD player can read/write-access "Persistent Storage" or "Network Manager". Data loaded by "Advanced Content Player" and used for playback generally can include "Advanced Navigation", "Advanced Element", and "Secondary Video Set". In one embodiment, "Primary Video Set" is stored in only "Disc", but not in "Persistent Storage" or "Network Server".

Data stored in "Disc" can include "Advanced Navigation", "Advanced Element", "Primary Video Set", and "Secondary Video Set". In one embodiment, "Disc" is a read only medium. No data is written in "Disc" by playback control of "Advanced Navigation".

"Data Access Manager" incorporates "Persistent Storage Manager", "Network Manager", and "Disc Manager" which generally access data from "Persistent Storage", "Network Server", and "Disc", respectively. Data access to "NAS (Network Attached Storage) included in "Persistent Storage" may be done by "Persistent Storage Manager" using the "Network Manager" function.

A line directed from "Disc Manager" to "Navigation Manager" indicates the flow of data when "Navigation Manager" loads "Startup File" contained in "Advanced Navigation" after a predetermined disc type discrimination process at the time of insertion of a disc. A line directed from "Disc Manager" to "Primary Video Player" indicates the data flow of "Primary Video Set". A line directed from "Disc Manager" to "Secondary Video Player" indicates the data flow of "Second Video Set" interleaved in a multiplexed data structure on "Disc".

A line directed from "Disc Manager" to "File Cache Manager" indicates the data flow of "Advanced Element" interleaved in the multiplexed data structure on "Disc". A line directed from "Disc Manager" to "File Cache" indicates the data flow of "Advanced Navigation", "Advanced Element", and "Secondary Video Set" which are not contained in the multiplexed data structure on "Disc".

A line directed from "Persistent Storage" or "Network Server" to "File Cache" indicates the flow of "Advanced Navigation", "Advanced Element", and "Secondary Video set" and their reverse flow. A line directed from "Persistent Storage" or "Network Server" to "Streaming Buffer" indicates the flow of "Secondary Video Set".

A line directed from "File Cache" to "Navigation Manager" indicates the flow of causing "Navigation Manager" to load "Advanced Navigation". A line directed from "File Cache Manager" to "File Cache" indicates the flow of writing, in "File Cache" for each data file, the "Advanced Element" data sent from "Disc Manager" to "File Cache". A line directed from "File Cache" to "Advanced Element Presentation Engine" indicates the flow of "Advanced Element". A line directed from "File Cache" to "Secondary Video Player" indicates that the data flow when the TMAP or S-EVOB of "Secondary Video Set" once stored as file data in "File Cache is played back.

A line directed from "Streaming Buffer" to "Secondary Video Player" indicates the data flow wherein a large "Secondary Video Set" stored in "Persistent Storage" or "Network Server" is loaded in "Streaming Buffer" little by little and is then supplied to "Secondary Video Player". This operation is done due to the following reason. When data is supplied from "Data Source" whose data loading speed is not constant such as a general network, the data loading speed fluctuation is absorbed to minimize discontinuation of "Secondary Video Set" playback.

A dotted line directed from "Advanced Navigation Engine" to "Presentation Engine" or "AV Renderer" indicates a control signal. A line directed to "Presentation Engine" often indicates that text subtitle data stored in the "Advanced Navigation" data made up of markup/script data is supplied.

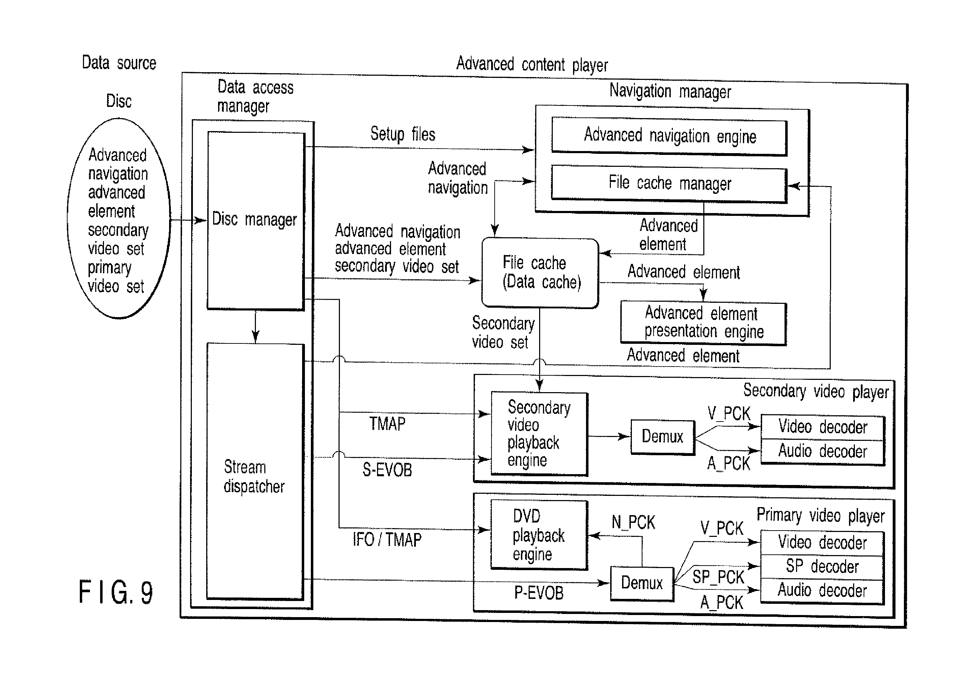

FIG. 9 is a more detailed block diagram when FIG. 8 is illustrated from the viewpoint of a data supply from "Disc". In FIG. 8, the "Disc Manager" in "Data Access Manager" handles the data from "Disc". In FIG. 9, "Stream Dispatcher" can also handle the data from "Disc".

"Stream Dispatcher" has functions of receiving the multiplexed data structure from "Disc Manager", and respectively supplying P-EVOBS data, S-EVOB data, and "Advanced Element" data interleaved in a multiplexed data structure to a Demux device in "Primary Video Player", "Secondary Video Playback Engine" in "Secondary Video Player", and "File Cache Manager" in "Navigation Manager".

Upon inserting "Disc" to the player according to the embodiment of the invention, "Disc Manager" supplies "Startup File" recorded on "Disc" to "Navigation Manager". The "Advanced Navigation" file, "Advanced Element" file, and "Secondary Video Set" file which are managed in a file system on "Disc" are loaded in "File Cache" on the basis of a result obtained when "Advanced Navigation Engine" in "Navigation Manager" interprets "Startup File" and "Advanced Navigation".

When "Primary Video Player" is to play back "Primary Video Set", the IFO data and TMAP data of "Primary Video Set" are loaded from "Disc Manager" onto "DVD Playback Engine", prior to playback of "Primary Video Set". "Primary Video Player" provides an upper control API (Application Interface) to "Navigation Manager" for playing back "Primary Video Set". The upper control API is an API such as "Play", "FF", "STOP", or "PAUSE". The detailed playback control processing of "Primary Video Set" is controlled by "DVD Playback Engine".

"DVD Playback Engine" performs playback control of "Primary Video Set" in accordance with the upper control API from "Advanced Navigation Engine" in accordance with the description of "Advanced Navigation".

"Demux" demultiplexes P-EVOB data to supply a control pack (N_PCK) to "DVD Playback Engine" and supply a video pack (V_PCK), sub-picture pack (SP_PCK), and audio pack (A_PCK) to "Video Decoder", "SP Decoder", and "Audio Decoder", respectively. These decoders decode the acquired PCK data in appropriate units.

When "Secondary Video Player" is to play back "Secondary Video Set" in which the S-EVOB is interleaved in the multiplexed data structure on "Disc", the TMAP data of "Secondary Video Set" is loaded from "Disc Manager" onto "Secondary Video Playback Engine", prior to playback of "Secondary Video Set". "Secondary Video Set" managed on the file system can also be stored in "File Cache" temporarily, and then loaded and played back by "Secondary Video Playback Engine".

"Secondary Video Player" provides an upper control API for playing back "Secondary Video Set" as well as "Primary Video Player".

"Secondary Video Playback Engine" performs playback control of "Secondary Video Set" in accordance with the upper control API from "Advanced Navigation Engine" in accordance with the description of "Advanced Navigation".

"Demux" in "Secondary Video Player" demultiplexes the S-EVOB data to supply a video pack (V_PCK) and audio pack (A_PCK) to "Video Decoder" and "Audio Decoder", respectively.

In this embodiment, "Second Video Set" contains the video pack and audio pack. However, "Secondary Video Set" may also contain a sub-picture pack and control pack.

"File Cache Manager" acquires an "Advanced Element" data pack output from "Stream Dispatcher". The pack data is supplied until it can be handled as one file data. After that, the pack data is written in "File Cache" as one file which belongs to "Advanced Element".

For example, when large file data such as font data is to be written in "File Cache", the file data may be started to be written in "File Cache" before all the font file data in "File Cache Manager" are collected, and the file data may be successively written in "File Cache" to form a final font file in "File Cache".

"Advanced Element" stored in the multiplexed data structure can also be compressed and then interleaved. In this case, "File Cache Manager" loads the compressed "Advanced Element" data by a decompressable size to perform a decompression process. As a result, the generated "Advanced Element" file is written in "File Cache". The "Advanced Element" data may be compressed for each file. Alternatively, the plurality of "Advanced Element" files may be archived to be compressed.

"Advanced Element Presentation Engine" loads the "Advanced Element" data from "File Cache", and decodes "Advanced Element" on the basis of control commands and signals generated by "Advanced Navigation Engine" in accordance with the description of "Advanced Navigation".

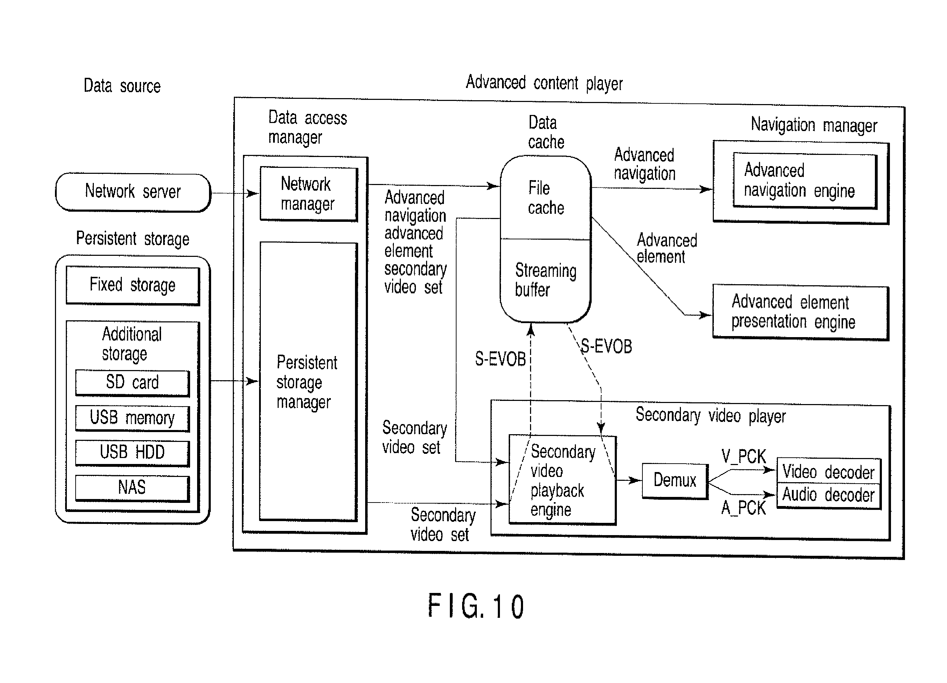

FIG. 10 is a more detailed block diagram when FIG. 8 is illustrated from the viewpoint of a data supply from "Network Server" and "Persistent Storage". A device serving as "Persistent Storage" can be divided into "Fixed Storage" and "Additional Storage". "Fixed Storage" is a recording medium permanently connected to the HD_DVD player, and generally corresponds to a flash memory.

"Additional Storage" is a recording medium which is detachable from the HD_DVD player. "Additional Storage" can include a memory card represented by an SD card, a memory device and HDD device which are connected via a connection interface such as a USB, a NAS (Network Attached Storage) connected on the network, and the like.

As the supply model from "Disc" shown in FIG. 9, data such as "Advanced Navigation", "Advanced Element", and "Secondary Video Set" are supplied via "Network Manager" and "Persistent Storage Manager".

When "Secondary Video Set" having the S-EVOB data whose capacity is larger than that of "File Cache" is to be played back, the data is directly supplied to "Secondary Video Playback Engine" sequentially, to play back "Secondary Video Set". At this time, in accordance with control described in "Advanced Navigation", "Secondary Video Playback Engine" can play back "Secondary Video Set" while temporarily storing it in "Streaming Buffer". This operation is done due to the following reason. When data supply speed is not constant such as a network, discontinuation of "Secondary Video Set" playback is reduced or minimized. Generally, "Streaming Buffer" need not be used in order to play back "Secondary Video Set" loaded in "File Cache".

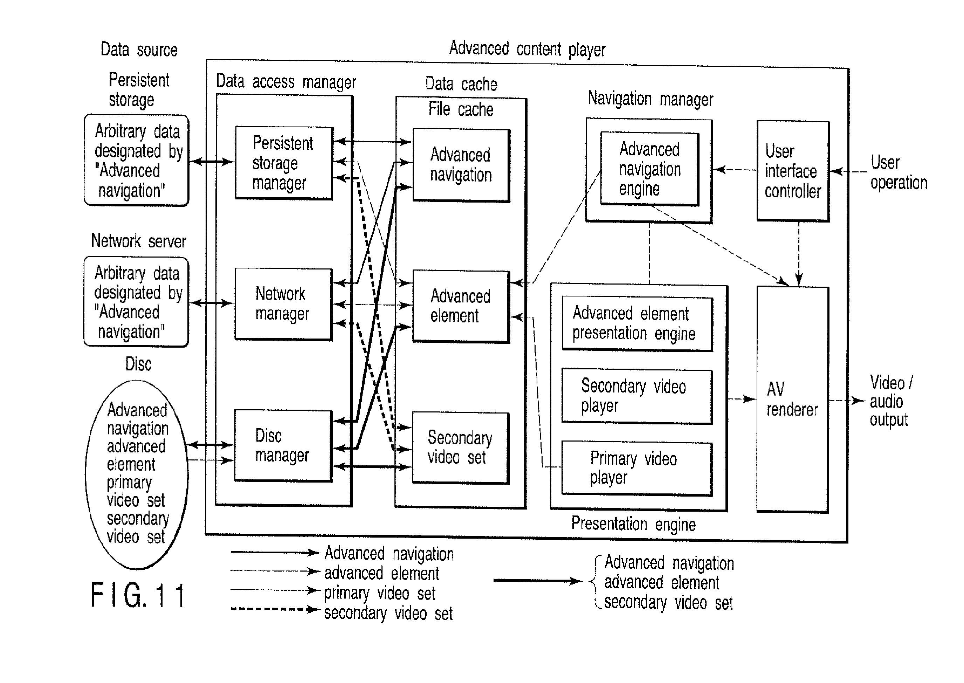

FIG. 11 is a detailed block diagram when FIG. 8 is illustrated from the viewpoint of the data storage flow to "Persistent Storage" and "Network Server". A line directed from "Advanced Navigation Engine" to "Advanced Element" indicates the flow of causing "Advanced Navigation Engine" to write, in "File Cache", "Advanced Element" such as the data file generated using the script language or the like. "Advanced Navigation" generates a file for recording the number of times of viewing the video on "Disc" by using the description in the script language to store the generated file in "Persistent Storage". Whenever the user has finished viewing the video picture data on the disc, the data in the file is updated. The number of times of viewing the video may be displayed on a screen, and the game score data generated by using the script language may be sent to "Network Server" to compete in the game to earn a high score. Such data generated by "Advanced Navigation Engine" is once stored in "File Cache", and then copied or moved to appropriate storage destinations.

A line directed from "Primary Video Player" to "Advanced Element" indicates the flow of temporarily stopping the video picture data in the playback process of "Primary Video Set" in accordance with the description of "Advanced Navigation Engine" or interpretation of a user operation, and writing, in "File Cache", "Advanced Element" such as an image file obtained by capturing a frame. The generated captured frames may be collected to make an original chapter collection with appropriate descriptions. The data may be stored in "Persistent Storage" and the like to view the video picture data by selecting a scene based on the original chapter frames from the next time. Frame capturing sources may include the "Secondary Video Set" frame output from "Secondary Video Player", a graphic frame output from "Advanced Element Presentation Engine", or an image output from "AV Renderer" obtained by mixing these frames.

The data generated by "Navigation Manager", "Presentation Engine", and the like are temporarily stored in "File Cache", and then stored on an appropriate Data Source medium in accordance with the description of "Advanced Navigation". Similarly, when the contents in "Persistent Storage", "Network Server", and "Disc" are to be stored in or uploaded to "Persistent Storage" or "Network Server", the data is temporarily loaded in "File Cache", and then stored on the appropriate Data Source medium, in accordance with the description of "Advanced Navigation".

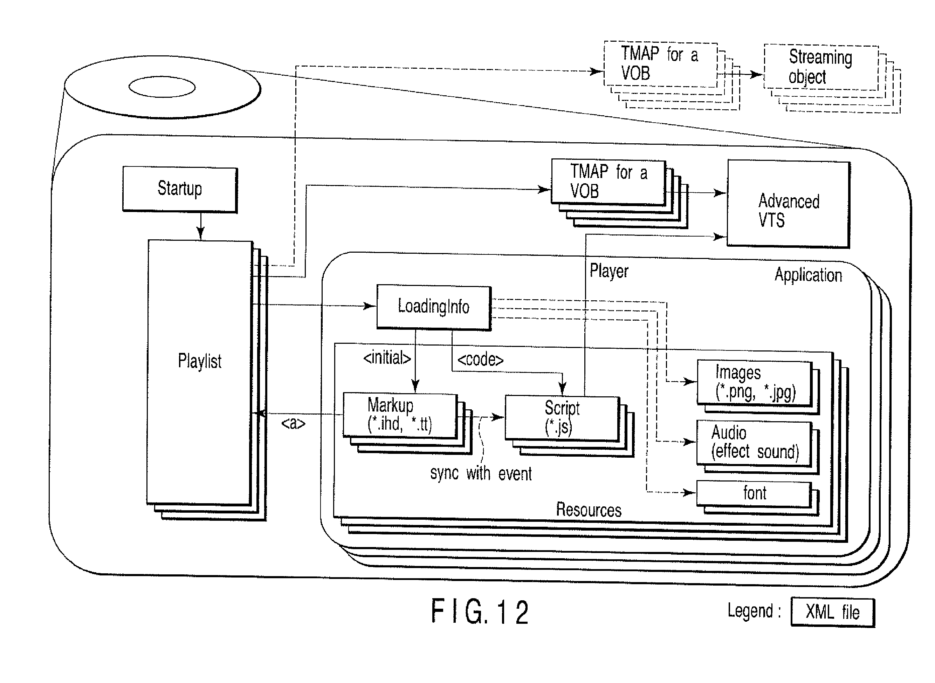

FIG. 12 is an exemplary view for explaining the relationship between pieces of information associated with a playlist, and exemplifying the relationship between "Advanced Contents" on the disc. One Startup file in an Advanced Content recording area on the disc determines one of "Playlists". Determined "Playlist" includes three descriptions, i.e., designation of "Application" (Object Mapping), reference to a TMAP file of EVOB on the disc or network (Playback Sequence), and determination of "Player" setting (Configuration Information).

"Startup" designates only one "Playlist". When designated "Playlist"' is changed in the markup language in "Application", it is to be replaced. Each "Application" designated by "Playlist" includes one XML file called "Loading Information" which designates "Resource" used in "Application".

FIG. 13 is an exemplary view for explaining an arrangement of the playlist. "Object Mapping", "Playback Sequence", and "Configuration" are respectively described in three areas designated under an element.

This playlist file can include the following information: Object Mapping Information (playback object information which exists in each title, and is mapped on the time line of this title); Playback Sequence (title playback information described on the time line of the title); and Configuration Information (system configuration information such as data buffer alignment).

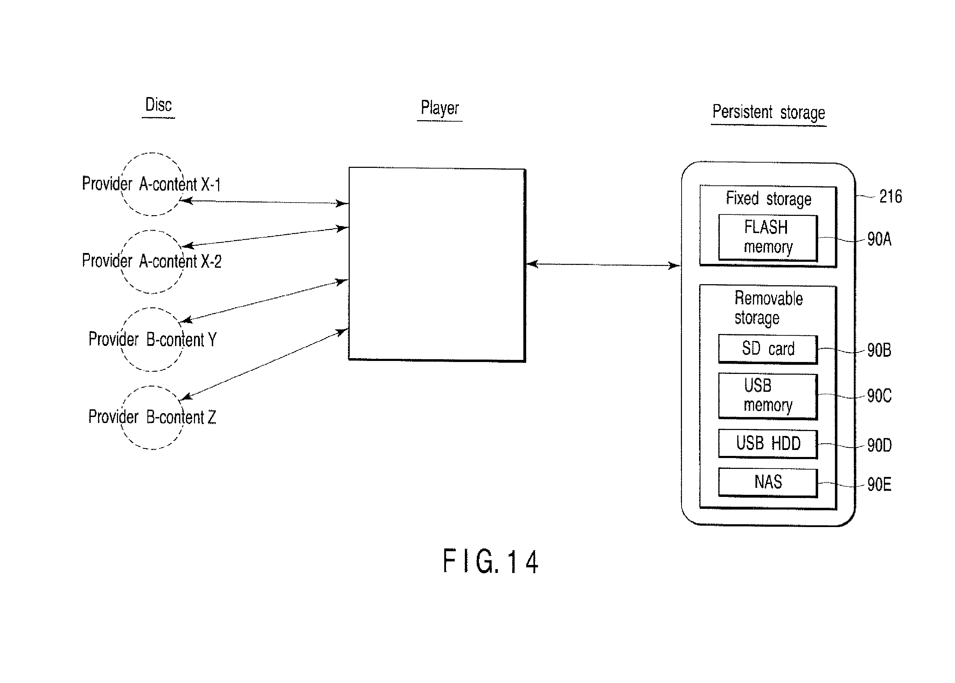

A persistent storage 216 will be described in detail below with reference to FIGS. 14 to 21.

FIG. 14 is an exemplary view showing the relationship among the disc on which contents are recorded, the player, and the persistent storage 216.

Contents (movie, game, and the like) provided by a certain provider (company which provides movie, game, and the like) are recorded on each disc. FIG. 14 exemplifies a disc which records "Content X-1" provided by "Provider A", a disc which records "Content X-2" provided by "Provider A", a disc which records "Content Y" provided by "Provider B", and a disc which records "Content Z" provided by "Provider B".

Alternatively, as shown in FIGS. 5, 6, and the like, the persistent storage 216 includes a nonvolatile storage medium such as a hard disk or flash memory, and stores information (game score and the like) used while playing back the contents recorded on the disc. As shown in FIG. 14, various storage devices such as a flash memory 90A serving as "Fixed storage", and an SD card 90B, USB memory 90C, USB HDD 90D, and NAS (Network Attached Storage) 90E serving as "Removable Storages" are included. The information used while playing back the contents provided by a corresponding provider is divided and stored in the persistent storage 216 for each provider. In this case, each information is stored in the form of a text file, still image file, audio file, or the like.

The player corresponds to the playback apparatus shown in FIG. 5. For example, the player stores the information generated while playing back the contents recorded on the disc in accordance with the playlist or the like as a resource in a predetermined storage area of the persistent storage 216. The player also reads out the stored information, and plays it back in synchronism (or asynchronism) with the corresponding contents.

The persistent storage 216 in this embodiment has the following characteristics associated with the resource management.
-- Two kinds of keys ("Provider ID" and "Content ID") are used to specify the resource. The area for storing the resource is divided for each provider, and "Provider ID" is allocated to each area (Provider Area). Each "Provider Area" is divided for each content, and "Content ID" is allocated to each area (Content Area). Both "Provider ID" and "Content ID" are expressed using a generalized character string called "GUID".
-- While playing back contents provided by a certain provider, access to resources (or management information) used to play back contents is limited to that provided by the certain provider. In an access, only one "Provider Key" should be used. That is, while playing back the contents provided by a certain provider, access to the resources used to play back the contents provided by the certain provider is permitted, and access to resources used to play back contents provided by another provider is inhibited.
-- In each "Provider Area", an information file corresponding to the management information is provided. Similarly, in each "Content Area", the information file corresponding to the management information is provided. The player can access these information files via the API.

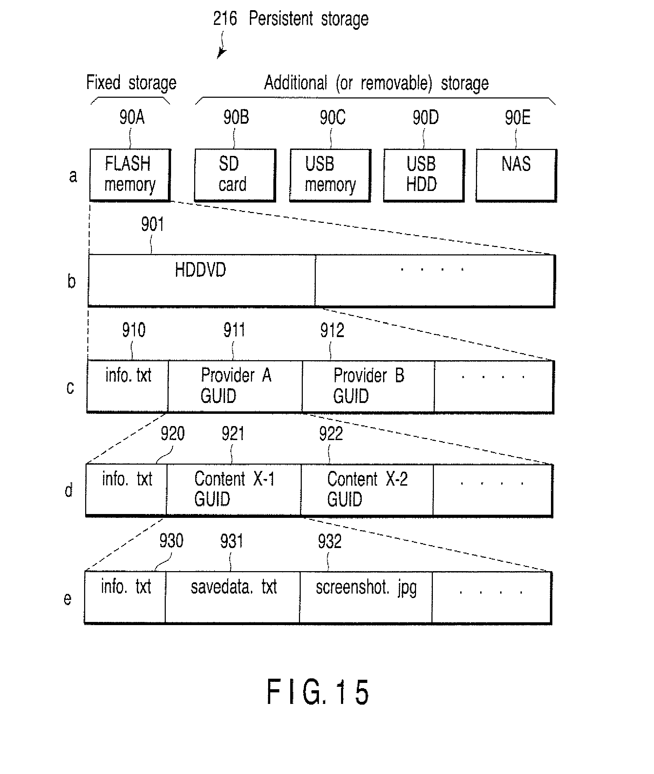

FIG. 15 is an exemplary view showing the arrangements of various kinds of information recorded in the persistent storage 216.

As shown in FIG. 15, reference a, the persistent storage 216 includes the flash memory 90A, SD card 90B, USB memory 90C, USB HDD 90D, and NAS (Network Attached Storage) 90E as the storage devices for storing the resources.

As shown in FIG. 15, reference b, for example, the flash memory 90A has an area 901 for storing resources associated with contents on the HD-DVD.

As shown in FIG. 15, reference c, for example, the area 901 has an area 910 for storing the information file containing the management information associated with the flash memory 90A (or HD-DVD) and that associated with areas 911, 912,.... The area 901 also has the provider area 911 corresponding to "Provider A", the provider area 912 corresponding to "'Provider B",....

As shown in FIG. 15, reference d, for example, the area 911 has an area 920 for storing the information file containing the management information associated with "Provider A" and that associated with areas 921, 922,.... The area 911 also has the "Content Area" 921 corresponding to "Content X-1", the "Content Area" 922 corresponding to "Content X-2",....

As shown in FIG. 15, reference e, for example, the area 921 has an area 930 for storing the information file containing the management information associated with "Content X-1" and that associated with areas 931, 932,.... The area 921 also has the area 931 for storing savedata.txt serving as the resource corresponding to "Content X-1", the area 932 for storing screenshot.jpg serving as the resource corresponding to "Content X-1",....

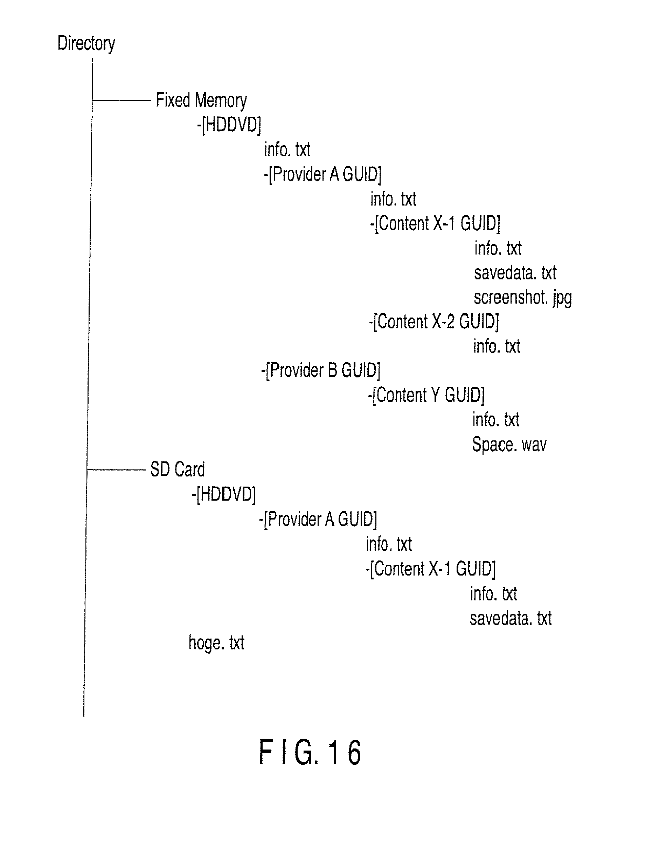

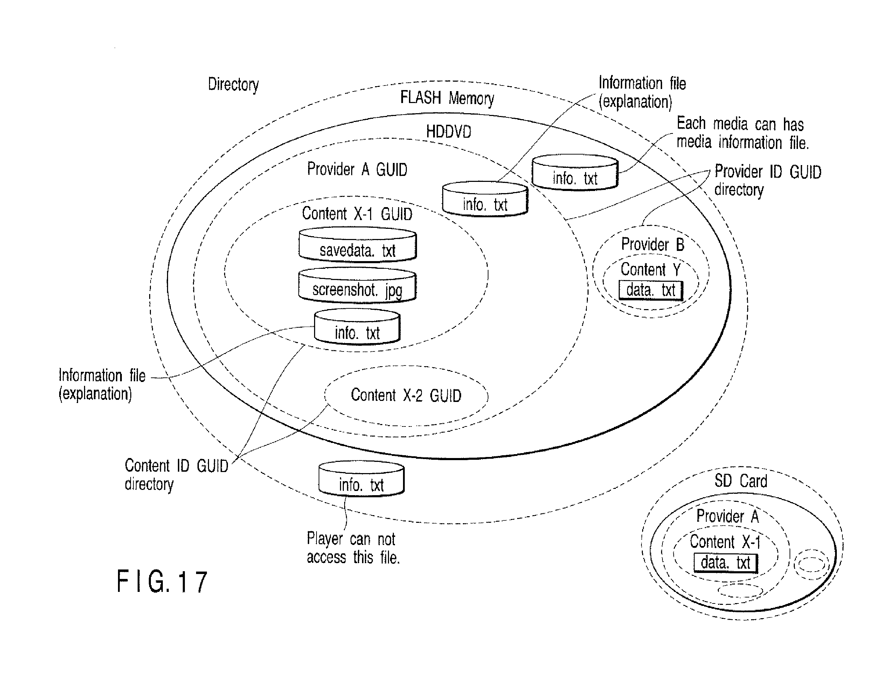

FIG. 16 is an exemplary view showing the directory structure of various kinds of information stored in the persistent storage 216. FIG. 17 is an exemplary view for expressing the directory structure when FIG. 16 is illustrated from the different viewpoint.

In FIG. 16, the directories are roughly divided into "Fixed Memory" (or flash memory), "SD Card", and the like for the purposes of illustration.

Under "Fixed Memory" (or flash memory), a directory [HDDVD] under the root directory corresponding to the HD DVD exists. Under the directory [HDDVD], the information file (info.txt), and "Provider Directory" ([Provider A GUID], [Provider B GUID],...) corresponding to respective providers exist. Under each "Provider Directory", the information file (info.txt), and "Content Directory" ([Content X-1 GUID], [Content X-2 GUID],...) corresponding to respective contents are provided. Additionally, under each "Content Directory", the information file (info.txt), and various kinds of resources (text file, still image file, audio file, and the like) associated with the respective contents exist.

Under "SD Card" or the like serving as "Removable Storage", a directory [HDDVD] corresponding to the HD_DVD exists. Under the directory [HDDVD], the similar information exists. Note that the above-described player cannot access hoge.txt existing outside the directory [HDDVD] corresponding to the HD_DVD.

As described earlier, three kinds of information files (info.txt) exist, i.e., "Device information file", "Provider information file", and "Content information file".
-- "Device information file" exists under the directory [HDDVD] corresponding to the HD_DVD. This file can be acquired via the API, and supplied in a format of, e.g., "String value = PersistentStorageDevice.getInformation".
-- "Provider information file" exists under "Provider Directory". This file can be acquired and set via the API, and describes information about the provider, including a provider name.
-- "Content information file" exists under "Content Directory". This file can also be acquired and set via the API, and describes information about the contents including a title name.

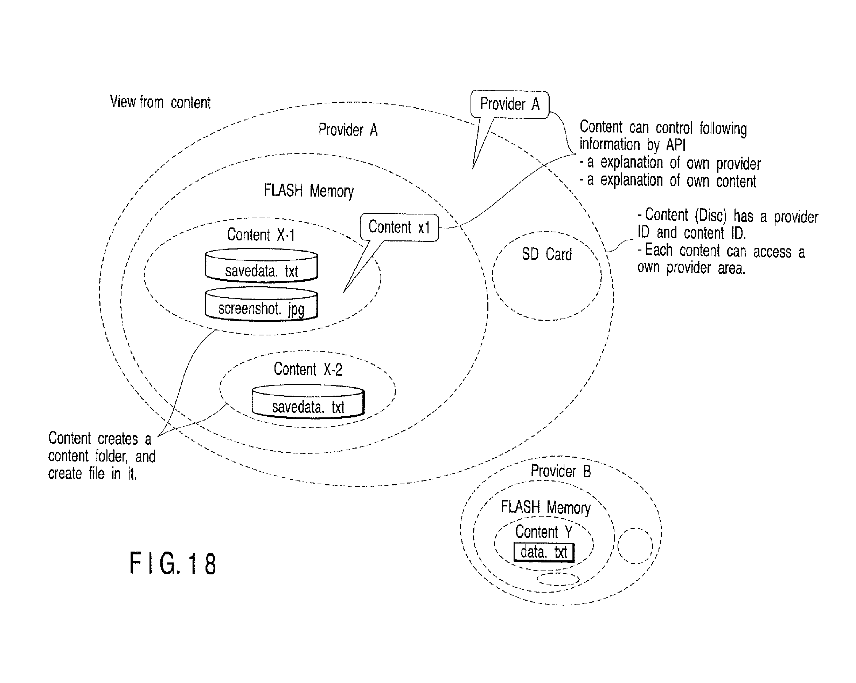

FIG. 18 is a conceptual view when the various kinds of information recorded in the persistent storage 216 are seen from a contents side on the disc.

When calling a given resource while playing back the contents on the disc, access is made via the API by using the standard character string including "Provider ID" and "Content ID". For example, when a given resource is to be designated while playing back "Content X-1", the player can only access resources in "Provider Area" corresponding to "Provider A" which provides "Content X-1". In other words, the player can access any resources in "Provider Area" corresponding to "Provider A". In FIG. 18, the player can access not only the resource associated with "Content X-1" in "Provider Area", but also the resource associated with "Content X-2". Hence, for example, the resource associated with "Content X-2" can be played back while playing back "Content X-1".

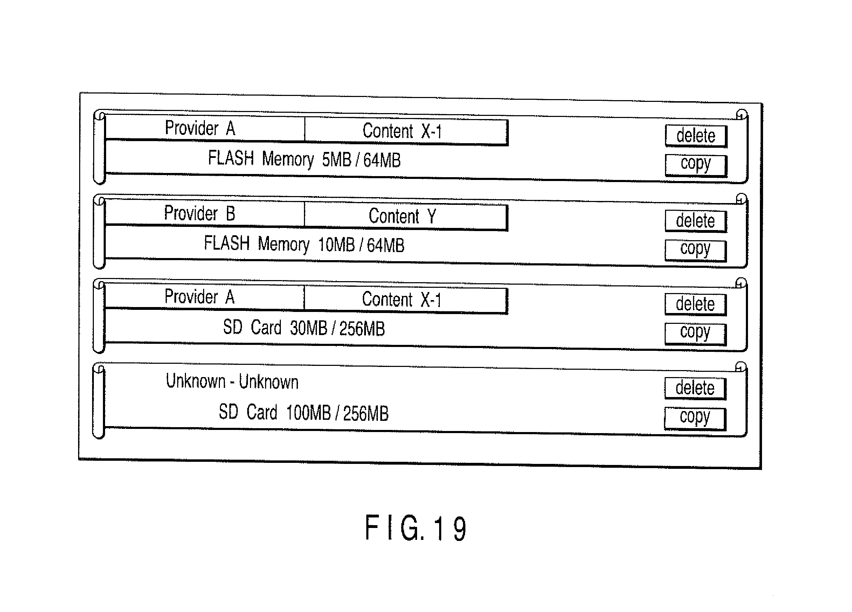

FIG. 19 is an exemplary view showing an example of a menu screen associated with the individual resources managed on the persistent storage 216.

The player displays this menu screen on the display unit. In this menu screen, information containing information (medium type, used capacity, and overall capacity) of an information storage medium for storing the resource, information (provider name) of the corresponding provider, and information (title name) of the corresponding contents are displayed for each resource.

The pieces of information about the provider and contents are displayed in still images. In this case, the image file designated by the information file (info.txt) stored in the persistent storage 216 is read out. The size of the image file is fixed. If the information file, ID information, and the like are not found, "Unknown" or the like is displayed. As described above, since the information is displayed in the form of a still image but not in a form using the font, it is possible to avoid the situation that different font or size of the characters may be displayed for each providers, thereby easily obtaining generalized display form and display size.

Each information displayed on the menu screen can be edited, e.g., deleted and copied in accordance with user's wishes. However, specific information cannot be deleted.

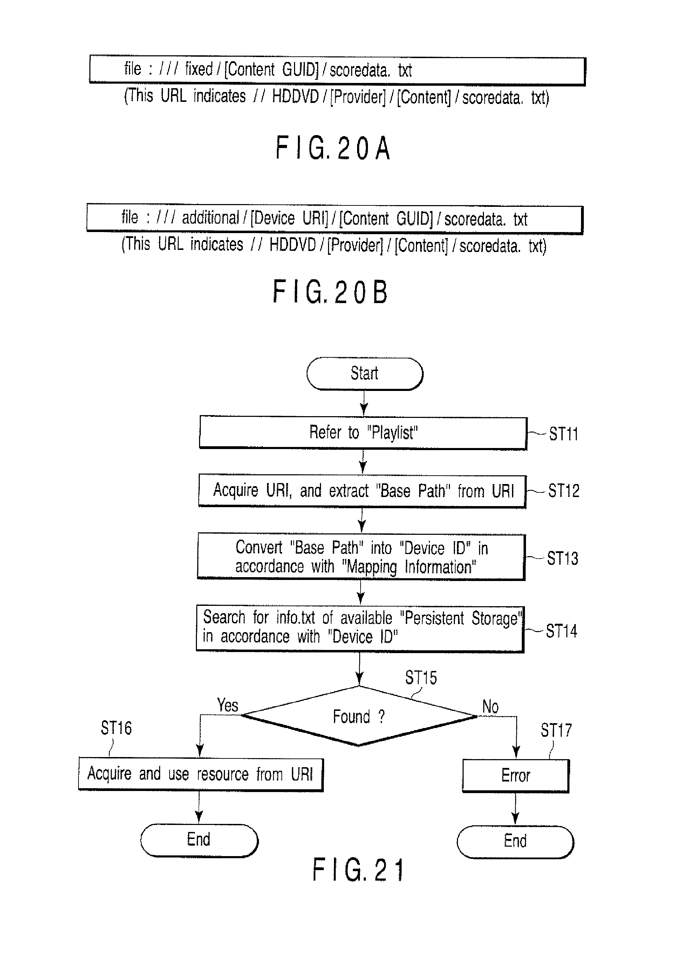

FIGS. 20A and 20B are exemplary views for explaining that each resource is uniquely specified in accordance with information in a generalized expression format. This information in the generalized expression format is called "URI", and contains GUID information used to specify the resource.

FIG. 20A shows an example when scoredata.txt stored in "Fixed Storage" is designated. In this example, "fixed" for identifying "Fixed Storage", [Content GUID] for identifying the contents, and scoredata.txt for identifying the file are sequentially described.

FIG. 20B shows an example when scoredata.txt stored in "Removable Storage" (i.e., "Additional Storage") is designated. In this example, "Removable" for identifying "Removable Storage", "Device URI" for identifying the storage device in "Removable Storage", [Content GUID] for identifying the contents, and scoredata.txt for identifying the file are subsequently described. The above-described "Device URI" can be changed in accordance with user's wishes.

With reference to FIG. 21, an operation when the player accesses the resources will be described.

First, the player refers to "Playlist" (block ST11), and extracts, from the URI described in "Playlist", "Base Path" used to guide to an access target (block ST12). Such "Base Path" is described in advance to indicate the access target in the URL (when the access target is the SD card, a character string indicating "SD" is described).

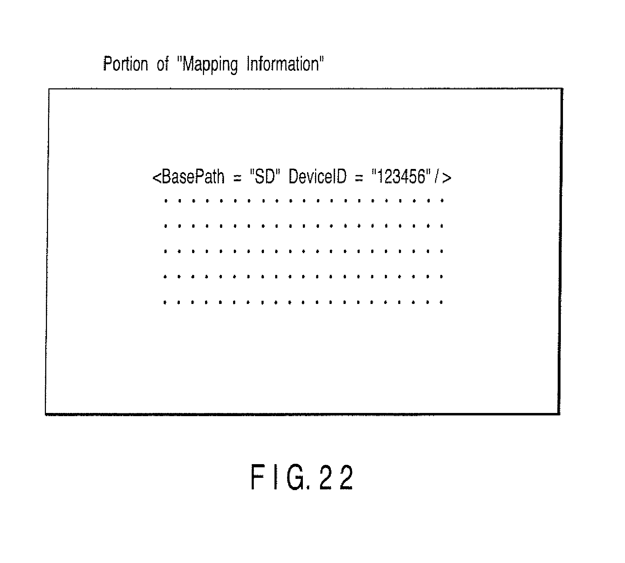

After that, in accordance with "Mapping Information" in a predetermined storage area, "Base Path" is converted into "Device ID" (block ST13). For example, "Mapping Information" contains the correspondence relationship between "Base Path" and "Device ID" as shown in FIG. 22. "Device ID" is described in a format of GUID. Note that the format for expressing the correspondence relationship between "Base Path" and "Device ID" is not limited to that shown in FIG. 21. Another expression format can be employed as far as the correspondence relationship can be expressed.

The player then searches for info.txt of available "Persistent Storage" in accordance with "Device ID" obtained in accordance of "Mapping Information" (block ST14). If info.txt is found (YES in block ST15), the resource indicated in info.txt is acquired and used (block ST16). Alternatively, if info.txt is not found (NO in block ST15), an error process is performed (block ST17).

As described above, the resource on the persistent storage 216 can be efficiently managed, and a desired resource can be certainly and easily specified by using the URI in the generalized format. Additionally, the resource state can be clearly grasped via the menu screen, and the individual resources can be easily added, changed, and deleted.

While playing back contents provided by a certain provider, access to resources used to play back contents provided by the certain provider is permitted, but access to resources used to play back contents provided by another provider is inhibited. Hence, problems about infringement of copyrights can be avoided between the providers, thus improving user's operability.

## Claims

1. A method of selecting media content, the method **characterized by** comprising:
determining that a removable storage medium (1) has been loaded into a drive (300);
retrieving from the removable storage medium (1) an identifier for a content provider of the removable storage medium (1); and
selecting multimedia data for playback from a data store (216) other than the removable storage medium (1), where the selected multimedia data is associated with the content provider of the removable storage medium (1).

2. The method of claim 1, **characterized by** further comprising arranging multimedia data in the data store (216) by content provider.

3. The method of claim 1, **characterized by** further comprising:
accessing a network; and
downloading multimedia data associated with the content provider into the data store (216).

4. The method of claim 1, **characterized by** further comprising playing back the selected multimedia data from the data store (216) prior to playing back media content from the removable storage medium (1).

5. The method of claim 1, **characterized by** further comprising playing back the selected multimedia data from the data store (216) synchronous with playback of media content from the removable storage medium (1).

6. The method of claim 5, **characterized in that** the selected multimedia data comprises an audio track that is not available in the removable storage medium (I).

7. The method of claim 1, **characterized in that** the removable storage medium (1) comprises a DVD.

8. The method of claim 1, **characterized in that** the data store (216) is a persistent data store.

9. The method of claim 8, **characterized by** further comprising restricting display of data in the data store (216) to data within a designated directory.

10. An apparatus for playing back multimedia data, the apparatus **characterized by** comprising:
a drive (300) adapted to retrieve data from a removable storage medium (1);
a data store (216) adapted to store multimedia data and an association of the stored multimedia data with one or more content providers; and
a controller (200) configured to determine a content provider associated with a removable storage medium (1) inserted into the drive (300), the controller (200) configured to select multimedia data from the determined content provider.

11. The apparatus of claim 10, **characterized in that** the apparatus comprises a DVD player, and the removable storage medium (1) comprises a DVD.

12. The apparatus of claim 10, **characterized in that** the data store (216) comprises a persistent data store.

13. The apparatus of claim 12, **characterized in that** the controller (200) is not able to display data stored in the data store (216) that is outside of a designated directory.

14. The apparatus of claim 10, **characterized by** further comprising arranging multimedia data in the data store (216) by content provider.

15. The apparatus of claim 10, **characterized in that** the controller (200) is further configured to:
access a network; and
download multimedia data associated with the content provider into the data store (216).

16. The apparatus of claim 10, **characterized in that** the controller (200) is configured to play back the selected multimedia data from the data store (216) prior to a play back of media content from the removable storage medium (1).

17. The apparatus of claim 10, **characterized in that** the controller (200) is further configured to play back the selected multimedia data from the data store (216) synchronous with playback of media content from the removable storage medium (1).

18. The apparatus of claim 17, **characterized in that** the selected multimedia data comprises an audio track that is not available in the removable storage medium (1).

19. An apparatus for storing data, the apparatus **characterized by** comprising:
a persistent storage medium (216), wherein at least a portion of data stored thereon is identifiable by content provider;
wherein access to data stored within the persistent storage medium (216) is controlled such that data stored thereon that is associated with a first content provider is retrievable only in connection with other data associated with the same content provider.

20. The apparatus of claim 19, **characterized in that** data in the persistent storage medium (216) is further arranged according to a hierarchical tree,
wherein the data associated with the first content provider is stored in a directory dedicated for data associated with the first content provider.
